(19) Europäisches Patentamt
European Patent Office
Office européen des brevets

(11) EP 1 312 658 B1

(12) **EUROPÄISCHE PATENTSCHRIFT**

(45) Veröffentlichungstag und Bekanntmachung des Hinweises auf die Patenterteilung:
**23.11.2005 Patentblatt 2005/47**

(51) Int Cl.[7]: **C09J 153/00**, C08F 293/00

(21) Anmeldenummer: **02023120.5**

(22) Anmeldetag: **15.10.2002**

(54) **Orientierte Acrylatblockcopolymere**

Oriented acrylate blockcopolymer

Copolymère bloc orienté d' acrylate

(84) Benannte Vertragsstaaten:
**DE ES FR GB IT**

(30) Priorität: **16.11.2001 DE 10156088**

(43) Veröffentlichungstag der Anmeldung:
**21.05.2003 Patentblatt 2003/21**

(73) Patentinhaber: **tesa AG**
**20253 Hamburg (DE)**

(72) Erfinder:
- **Husemann, Marc, Dr.**
**22605 Hamburg (DE)**
- **Dollase, Thilo, Dr.**
**22391 Hamburg (DE)**

(56) Entgegenhaltungen:
**EP-A- 1 008 640**
**EP-A- 1 127 934**
**EP-A- 1 132 410**
**WO-A-00/39233**
**US-A- 5 866 249**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft orientierte Polyacrylathaftklebemassen auf Blockcopolymerbasis.

Durch immer größere Umweltauflagen und Kostendruck besteht zur Zeit der Trend zur Herstellung von Haftklebemassen ohne, oder nur mit geringen Mengen an Lösemittel. Dieses Ziel kann am einfachsten durch die Heißschmelz-Technologie (Hotmett-Technologie) verwirklicht werden. Ein weiterer Vorteil ist die Produktionszeitverkürzung. In Hotmelt-Anlagen können Klebemassen bedeutend schneller auf Träger oder Trennpapier laminiert werden und so Zeit und Geld eingespart werden.
Die Hotmelt-Technologie stellt aber immer höhere Anforderungen an die Klebemassen. Für hochwertige industrielle Anwendungen werden insbesondere Polyacrylate bevorzugt, da diese transparent und witterungsstabil sind.
Zur Herstellung von Acrylathotmelts werden konventionell Acrylatmonomere in Lösung polymerisiert und anschließend das Lösemittel in einem Aufkonzentrationsprozeß im Extruder entfernt.
Neben den Vorteilen in der Transparenz und der Witterungsstabilität müssen Acrylathaftklebemassen aber auch hohen Anforderungen im Bereich Scherfestigkeit gerecht werden. Dies wird durch Polyacrylate mit hohem Molekulargewicht, hoher Polarität und anschließender effizienter Vernetzung erreicht.
Die Vernetzung ist aber ein limitierender Faktor für diese Acrylathotmelts. Die UV-Vemetzung ist nur wenig geeignet, da die Eindringtiefe der UV-Bestrahlung nur auf maximal 70 µm begrenzt ist. Dieser Wert verringert sich weiter, wenn Harze als klebkraftfördemde Additive beigesetzt sind. Als alternative Technik steht die Elektronenstrahlvernetzung zur Verfügung, die aber für Acrylatmassen einen äußerst ungünstigen Vemetzungsmechanismus aufweist, da in der Regel diese Haftklebemassen gesättigt sind und keine Doppelbindungen vorhanden sind. Als Folge ist diese Vernetzung gegenüber der konventionellen thermischen Vernetzung für Acrylatlösemittelmassen deutlich unterlegen, was dazu führt , das die Wärmescherfestigkeit auf einem geringeren Niveau liegt.

Eine weitere Eigenschaft für die Beschichtung von Acrylatmassen aus der Schmelze ist das Phänomen der Orientierung der Polymerketten. Für die Eigenschaften von Haftklebemassen spielt diese Orientierung der Makromoleküle eine bedeutende Rolle. Durch die Orientierung kann es zu besonderen Eigenschaften der entsprechenden Polymere kommen, im allgemeinen aber zumindestens zu planarer Anisotropie der Eigenschaften. Einige für Polymere generelle Beispiele für durch den Orientierungsgrad beeinflußbare Eigenschaften sind Festigkeit bzw. Steifigkeit der Polymere bzw. der daraus hergestellten Kunststoffe, thermische Leitfähigkeit, thermische Stabilität sowie anisotropes Verhalten bezüglich der Durchlässigkeit für Gase und Flüssigkeiten (I.M. Ward, Structure and Properties.of oriented polymers, 2$^{nd}$ ed. 1997, Kluwer, Dortrecht).

Für orientierte Haftklebemassen wurden ebenfalls interessante Eigenschaften gefunden. So wurde die Generierung einer partiellen Orientierung in teilkristallinen kautschukbasierenden Haftklebemassen bereits in der US 5,866,249 beschrieben. Durch die anisotropen Klebeigenschaften konnten innovative Haftklebeanwendungen definiert werden.

Nachteilig am zum Stand der Technik gehörigen Haftklebemassen ist, daß zum einen die Acrylathotmelts im Prozeß vernetzt werden müssen, um die Orientierung zu erhalten und daß zum anderen die Orientierung über einen längeren Zeitraum durch Strukturrelaxation langsam abnimmt.

Aufgabe der vorliegenden Erfindung ist es, Haftklebesysteme zur Verfügung zu stellen, welche ohne zusätzliche Vernetzung ein vorgegebenes Eigenschaftsprofil aufweisen, welches über einen längeren Zeitraum erhalten bleibt, ohne daß die Nachteile des Standes der Technik in Kauf genommen werden müssen. Aufgabe ist es weiterhin, ein Verfahren zur Herstellung solcher Haftklebemassen anzubieten.

Gelöst wird die Aufgabe überraschend und für den Fachmann in nicht vorhersehbarer Weise durch die orientierten haftklebenden Systeme, wie sie im Hauptanspruch dargestellt ist. Die Unteransprüche betreffen bevorzugte Weiterentwicklungen dieser Haftklebemasse. Weiterhin wird ein Verfahren zur Herstellung derartiger Haftklebemassen sowie eine Verwendung hierfür beansprucht.

Die Erfindung betrifft somit Haftklebefilme, mindestens enthaltend eine Haftklebemasse auf Basis von zumindest einem Blockcopolymer, wobei die Gewichtsanteile der Blockcopolymere in Summe zumindest 50 % der Haftklebemasse ausmachen, wobei ein Blockcopolymer zumindest teilweise auf Basis von (Meth-)Acrylsäurederivaten zusammengesetzt ist (1), wobei weiterhin zumindest ein Blockcopolymer mindestens die Einheit P(A)-P(B)-P(A) aus wenigstens einem Polymerblock P(B) und wenigstens zwei Polymerblöcken P(A) aufweist (2), und wobei

- P(A) unabhängig voneinander Homo- oder Copolymerblöcke aus Monomeren A repräsentieren, wobei die Polymerblöcke P(A) jeweils eine Erweichungstemperatur im Bereich von + 20 °C bis + 175 °C aufweisen,
- P(B) einen Homo- oder Copolymerblock aus Monomeren B repräsentiert, wobei der Polymerblock P(B) eine Erweichungstemperatur im Bereich von - 130 °C bis + 10 °C aufweist,
- die Polymerblöcke P(A) und P(B) nicht homogen miteinander mischbar sind,

wobei die Haftklebefilme orientiert sind, indem sie eine Vorzugsrichtung besitzen, wobei der in Vorzugsrichtung mittels

Spektralphotometer gemessenen Brechungsindex $n_{MD}$ größer ist als der in einer Richtung senkrecht zur Vorzugsrichtung gemessene Brechungsindex $n_{CD}$.

Im folgenden werden die Polymerblöcke P(A) auch als "Hartblöcke" und die Polymerblöcke P(B) als "Elastomerblöcke" bezeichnet. Weiterhin werden im folgenden die Blockcopolymere, welche die Einheit P(A)-P(B)-P(A) aufweisen, als Triblockcopolymere bezeichnet, auch dann, wenn weitere Blöcke in dem Blockcopolymer vorhanden sind. Unter Erweichungstemperatur wird in diesem Zusammenhang bei amorphen Systemen die Glasübergangstemperatur und bei semikristallinen Polymeren die Schmelztemperatur verstanden. Glastemperaturen werden als Ergebnisse aus quasistatischen Verfahren wie z. B. Differential Scanning Calorimetry (DSC) angegeben.

Im folgenden sollen unter der Bezeichnung "Haftklebesysteme" Haftklebefilme verstanden werden.

Bevorzugt gelten ein, mehrere oder alle der im Vorstehenden für zumindest ein Blockcopolymer angegebenen Eigenschaften (1) und/oder (2) für mehrere oder alle der vorhandenen Blockcopolymere.

Eine sehr bevorzugte Ausführungsform der Haftklebesysteme weist eine Differenz $\Delta n$ der Brechungsindizes von $\Delta n = n_{MD} - n_{CD} \geq 1 \cdot 10^{-5}$ auf.

Sehr bevorzugt weisen die Haftklebesyssteme in Längs- und in Querrichtung ein unterschiedliches Zug/Dehnungsverhalten aufweisen.

Als im erfinderischen Sinne besonders vorteilhaft haben sich Systeme mit einem Rückschrumpf von zumindestens 5 % herausgestellt. Die Messung des Rückschrumpfes erfolgt dabei nach dem im experimentellen Teil als Methode D beschriebenen Prüfverfahren.

(Der Rückschrumpf von *trägerfreien* Haftklebestreifen ist definiert als das Verhältnis aus der Länge eines Teststreifens, der entlang der Beschichtungsrichtung entnommen wurde, und zwar kurz nach der Beschichtung und nach einer Woche.)

Besonders bevorzugt sind solche Haftklebesysteme, bei denen der Aufbau zumindest eines Blockcopolymers, bevorzugt mehrerer oder aller Blockcopolymere, durch eine oder mehrere der folgenden allgemeinen Formeln beschrieben werden kann:

$$P(A)\text{-}P(B)\text{-}P(A) \qquad (I)$$

$$P(B)\text{-}P(A)\text{-}P(B)\text{-}P(A)\text{-}P(B) \qquad (II)$$

$$[P(B)\text{-}P(A)]_n X \qquad (III)$$

$$[P(B)\text{-}P(A)]_n X [P(A)]_m \qquad (IV),$$

- wobei n = 3 bis 12, m = 3 bis 12 und X eine multifunktionelle Verzweigungseinheit darstellt, also ein chemisches Bauelement, über das verschiedene Polymerarme miteinander verknüpft sind.
- wobei die Polymerblöcke P(A) unabhängig voneinander Homo- oder Copolymerblöcke aus den Monomeren A repräsentieren, wobei die Polymerblöcke P(A) jeweils eine Erweichungstemperatur im Bereich von + 20 °C bis + 175 °C aufweisen,
- und wobei die Polymerblöcke P(B) unabhängig voneinander Homo- oder Copolymerblöcke aus den Monomeren B repräsentieren, wobei die Polymerblöcke P(B) jeweils eine Erweichungstemperatur im Bereich von - 130 °C bis + 10 °C aufweisen.

Bei den Polymerblöcken P(A), wie sie im Hauptanspruch oder in den vorteilhaften Ausführungsformen beschrieben sind, kann es sich um Polymerketten einer einzigen Monomersorte aus der Gruppe A oder um Copolymere aus Monomeren verschiedener Strukturen aus der Gruppe A handeln. Insbesondere können die eingesetzten Monomere A in ihrer chemischen Struktur und/oder in der Seitenkettenlänge variieren. Die Polymerblöcke umfassen somit die Spanne zwischen vollkommen homogenen Polymeren über Polymere aus Monomeren gleicher chemischer Grundstruktur, aber unterschiedlicher Kettenlänge und solchen gleicher Kohlenstoffzahl, aber unterschiedlicher Isomerie bis hin zu statistisch polymerisierten Blöcken aus unterschiedlich langen Monomeren mit unterschiedlicher Isomerie aus der Gruppe A. Das entsprechende gilt für die Polymerblöcke P(B) bezüglich der Monomere aus der Gruppe B.

Die Einheit P(A)-P(B)-P(A) kann dabei sowohl symmetrisch [entsprechend $P^1(A)\text{-}P(B)\text{-}P^2(A)$ mit $P^1(A) = P^2(A)$] als auch unsymmetrisch [etwa entsprechend der Formel $P^3(A)\text{-}P(B)\text{-}P^4(A)$ mit $P^3(A) \neq P^4(A)$, wobei aber sowohl $P^3(A)$ als auch $P^4(A)$ jeweils Polymerblöcke im Sinne der Definition für P(A) seien] aufgebaut sein.

Eine vorteilhafte Ausführung ist es, wenn zumindest ein Blockcopolymer, bevorzugt mehrere oder alle Blockcopolymere, einen symmetrischen Aufbau derart aufweisen, daß in der Kettenlänge und/oder der chemischen Struktur identische Polymerblöcke P(A) und/oder daß in der Kettenlänge und/oder der chemischen Struktur identische Polymerblöcke P(B) vorliegen.
$P^3$(A) und $P^4$(A) können sich insbesondere in ihrer chemischen Zusammensetzung und/oder ihrer Kettenlänge unterscheiden.

Als Monomere für den Elastomerblock P(B) werden vorteilhaft Acrylmonomere eingesetzt. Hierfür sind prinzipiell alle dem Fachmann geläufigen Acrylverbindungen, welche sich zur Synthese von Polymeren eignen, einsetzbar. Bevorzugt werden solche Monomere gewählt, welche Glasübergangstemperaturen des Polymerblocks P(B) auch in Kombination mit einem oder mehreren weiteren Monomeren von kleiner +10 °C bedingen. Entsprechend können bevorzugt die Vinylmonomere gewählt werden.

Für die Präparation der Polymerblöcke P(B) werden vorteilhaft zu 75 bis 100 Gew.-% Acrylsäure- und/oder Methacrylsäurederivate der allgemeinen Struktur

$$CH_2=CH(R^1)(COOR^2) \qquad (V)$$

eingesetzt, wobei $R^1$ = H oder $CH_3$ und $R^2$ = H oder lineare, verzweigte oder ringförmige, gesättigte oder ungesättigte Alkylreste mit 1 bis 30, insbesondere mit 4 bis 18 Kohlenstoffatomen darstellt,
und/oder bis zu 25 Gew.-% Vinylverbindungen (VI), welche günstigenfalls funktionelle Gruppen enthalten.

Acrylmonomere, die sehr bevorzugt im Sinne der Verbindung (V) als Komponenten für Polymerblöcke P(B) eingesetzt werden, umfassen Acryl- und Methacrylsäureester mit Alkylgruppen bestehend aus 4 bis 18 C-Atomen. Spezifische Beispiele für entsprechende Verbindungen sind, ohne sich durch diese Aufzählung einschränken zu wollen, n-Butylacrylat, n-Pentylacrylat, n-Hexylacrylat, n-Heptylacrylat, n-Octylacrylat, n-Nonylacrylat, Laurylacrylat, Stearylacrylat, Stearylmethacrylat, deren verzweigte Isomere, wie z.B. 2-Ethylhexylacrylat und Isooctylacrylat sowie cyclische Monomere wie z.B. Cyclohexyl-oder Norbornylacrylat und Isobornylacrylat.

Weiterhin können optional als Monomere im Sinne der Definition (VI) für Polymerblöcke P(B) Vinylmonomere aus den folgenden Gruppen eingesetzt werden: Vinylester, Vinylether, Vinylhalogenide, Vinylidenhalogenide, sowie Vinylverbindungen, die aromatische Zyklen und Heterozyklen in $\alpha$-Stellung enthalten. Auch hier seien beispielhaft ausgewählte erfindungsgemäß einsetzbare Monomere genannt: Vinylacetat, Vinylformamid, Vinylpyridin, Ethylvinylether, 2-Ethylhexylvinylether, Butylvinylether, Vinylchlorid, Vinylidenchlorid, Acrylnitril.

Als besonders bevorzugte Beispiele für vinylgruppenhaltige Monomere im Sinne der Definition (VI) für den Elastomerblock P(B) eignen sich weiterhin Hydroxyethylacrylat, Hydroxypropylacrylat, Hydroxyethylmethacrylat, Hydroxypropylmethacrylat, N-Methylolacrylamid, Acrylsäure, Methacrylsäure, Allylalkohol, Maleinsäureanhydrid, Itaconsäureanhydrid, Itaconsäure, Benzoinacrylat, acryliertes Benzophenon, Acrylamid und Glycidylmethacrylat, um nur einige zu nennen.

In einer bevorzugten Ausführungsform der erfinderischen Systeme enthält einer der oder enthalten mehrere der Polymerblöcke eine oder mehrere aufgepfropfte Seitenketten. Dabei wird nicht eingeschränkt, ob solche Systeme durch einen *graft-from-* (Aufpolymerisation einer Seitenketten ausgehend von einem bestehenden Polymerrückgrat) oder *graft-to*-Prozeß (Anbindung von Polymerketten an ein Polymerrückgrat über polymeranaloge Reaktionen) erhalten werden.
Insbesondere zur Herstellung solcher Blockcopolymere können als Monomere B derartig funktionalisierte Monomere eingesetzt werden, die einen *graft-from*-Prozeß zum Aufpfropfen von Seitenketten ermöglichen. Hier sind insbesondere Acryl- und Methacrylmonomere zu nennen, die als Funktionalisierung Halogene tragen oder alle anderen funktionellen Gruppen, die beispielsweise einen ATRP-Prozeß (Atom Transfer Radical Polymerization) erlauben. In diesem Zusammenhang sei auch die Möglichkeit genannt, über Makromonomere gezielt Seitenketten in die Polymerketten einzuführen. Die Makromonomere können wiederum aufgebaut sein entsprechend der Monomere B.

In einer speziellen Ausführung dieser Erfindung sind eine oder mehrere funktionelle Gruppen in die Polymerblöcke P(B) eingebaut, die eine strahlenchemische Vernetzung der Polymerblöcke insbesondere mittels UV-Bestrahlung oder durch Bestrahlung mit schnellen Elektronen erlauben. Als Monomereinheiten können mit dieser Zielsetzung insbesondere Acrylester genutzt werden, welche einen ungesättigten Alkylrest mit 3 bis 18 Kohlenstoffatomen enthalten, der mindestens eine Kohlenstoff-Kohlenstoff-Doppelbindung enthält. Für mit Doppelbindungen modifizierte Acrylate eignen sich besonders vorteilhaft Allylacrylat und acrylierte Zimtsäureester. Neben Acrylmonomeren lassen sich sehr vorteilhaft als Monomere für den Polymerblock P(B) auch Vinylverbindungen mit während der (radikalischen) Polymerisation des Polymerblockes P(B) nicht reaktiven Doppelbindungen einsetzen. Besonders bevorzugte Beispiele für entsprechende Comonomere sind Isopren und/oder Butadien, aber auch Chloropren.

Ausgangsmonomere für die Polymerblöcke P(A) werden bevorzugt derart ausgewählt, daß die resultierenden

Polymerblöcke P(A) mit den Polymerblöcken P(B) nicht mischbar sind und dementsprechend Mikrophasenseparation eintritt. Vorteilhafte Beispiele für Verbindungen, welche als Monomere A eingesetzt werden, sind Vinylaromaten, die auch alkyliert sein können, Methylmethacrylat, Cyclohexylmethacrylat, Isobornylmethacrylat und Isobornylacrylat. Besonders bevorzugte Beispiele sind Methylmethacrylat und Styrol, wobei diese Aufzählung keinen Anspruch auf Vollständigkeit erhebt.

Weiterhin können die Polymerblöcke P(A) aber auch als Copolymer aufgebaut sein, das zu mindestens 75 % aus den vorstehenden Monomeren A, das zu einer hohen Erweichungstemperatur führt, oder einem Gemisch dieser Monomere bestehen kann, aber bis zu 25 % Monomere B enthält, die zu einer Erniedrigung der Erweichungstemperatur des Polymerblocks P(A) führe. In diesem Sinne seien beispielhaft aber nicht ausschließlich Alkylacrylate genannt, die entsprechend der Struktur (V) und dem hierzu gesagten definiert sind.

In einer weiteren günstigen Ausführungsform der erfinderischen Haftklebemasse sind Polymerblöcke P(A) und/oder P(B) derart funktionalisiert, daß eine thermisch initiierte Vernetzung durchgeführt werden kann. Als Vernetzer können unter anderem in günstiger Weise gewählt werden: Epoxide, Aziridine, Isocyanate, Polycarbodiimide und Metallchelate, um nur einige zu nennen.

Ein bevorzugtes Charakteristikum der für die erfindungsgemäßen Haftklebesysteme eingesetzten Blockcopolymere ist, daß ihre Molmasse $M_n$ zwischen 25.000 und 600.000 g/mol, bevorzugt zwischen 30.000 und 400.000 g/mol, besonders bevorzugt zwischen 50.000 g/mol und 300.000 g/mol liegt. Der Anteil der Polymerblöcke P(A) liegt vorteilhaft zwischen 5 und 49 Gewichtsprozent des gesamten Blockcopolymers, bevorzugt zwischen 7,5 und 35 Gewichtsprozent, besonders bevorzugt zwischen 10 und 30 Gewichtsprozent. Die Polydispersität des Blockcopolymers liegt bevorzugt bei kleiner 3, gegeben durch den Quotienten D aus Massenmittel $M_w$ und Zahlenmittel $M_n$ der Molmassenverteilung.

Die Verhältnisse der Kettenlängen der Blockcopolymere P(A) zu denen der Blockcopolymere P(B) werden in sehr vorteilhafter Vorgehensweise so gewählt, daß die Blockcopolymere P(A) als disperse Phase ("Domänen") in einer kontinuierlichen Matrix der Polymerblöcke P(B) vorliegen. Dies ist bevorzugt der Fall bei einem Gehalt an Polymer blöcken P(A) von kleiner als ca. 25 Gew.-%. Die Domänen können bevorzugt kugelförmig oder verzerrt kugelförmig vorliegen. Die Ausbildung von hexagonal gepackten zylindrischen Domänen der Polymerblöcke P(A) ist ebenfalls im erfinderischen Sinne möglich. In einer weiteren Ausführungsform zielt man auf eine asymmetrische Gestaltung der Triblockcopolymere, wobei in linearen Systemen die Blocklängen der endständigen Polymerblöcke P(A) unterschiedlich sind. Die Kugelmorphologie ist besonders zu bevorzugen, wenn eine Erhöhung der inneren Festigkeit der Haftklebemasse nötig ist, sowie zur Verbesserung der mechanischen Eigenschaften.

In einer erfinderisch besonders bevorzugten Auslegung wird das $M_n$ Molekulargewicht des Mittelblocks P(B) auf $M_n$ = 250.000 g/mol begrenzt, um eine Beschichtbarkeit der Haftklebemasse aus der Schmelze zu erleichtern.

Weiterhin kann es vorteilhaft sein, Blends der obengenannten Blockcopolymere mit Diblockcopolymeren P(A)-P(B) einzusetzen, wobei zur Herstellung der entsprechenden Polymerblöcke P(A) und P(B) die gleichen Monomere wie oben genutzt werden können. Außerdem kann es von Vorteil sein, der aus den Blockcopolymeren, insbesondere aus Triblockcopolymeren (I), oder der aus einem Blockcopolymer/Diblockcopolymer-Blend bestehenden Haftklebemasse zur Verbesserung ihrer Eigenschaften Polymere P'(A) und/oder P'(B) zuzusetzen.

Dementsprechend betrifft die Erfindung weiterhin haftklebende Systeme mit Vorzugsrichtung, bei denen die Haftklebemasse einen Blend eines oder mehrerer Blockcopolymere mit einem Diblockcopolymer P(A)-P(B),

- wobei die Polymerblöcke P(A) (der einzelnen Diblockcopolymere) unabhängig voneinander Homo- oder Copolymerblöcke aus den Monomeren A repräsentieren, wobei die Polymerblöcke P(A) jeweils eine Erweichungstemperatur im Bereich von + 20 °C bis + 175 °C aufweisen,
- und wobei die Polymerblöcke P(B) (der einzelnen Diblockcopolymere) unabhängig voneinander Homo- oder Copolymerblöcke aus den Monomeren B repräsentieren, wobei die Polymerblöcke P(B) jeweils eine Erweichungstemperatur im Bereich von - 130 °C bis + 10 °C aufweisen,

und/oder mit Polymeren P'(A) und/oder P'(B),

- wobei die Polymere P'(A) Homo- und/oder Copolymere aus den Monomeren A repräsentieren, wobei die Polymere P'(A) jeweils eine Erweichungstemperatur im Bereich von + 20 °C bis + 175 °C aufweisen,
- wobei die Polymere P'(B) Homo- und/oder Copolymere aus den Monomeren B repräsentieren, wobei die Polymere P'(B) jeweils eine Erweichungstemperatur im Bereich von - 130 °C bis + 10 °C aufweisen,
- wobei die Polymere P'(A) beziehungsweise P'(B) bevorzugt mit den Polymerblöcken P(A) beziehungsweise P(B) mischbar sind.

darstellt.

Sofern sowohl Polymere P'(A) und Polymere P'(B) zugemischt sind, werden diese vorteilhaft derart gewählt,

daß die Polymere P'(A) und P'(B) nicht homogen miteinander mischbar sind.

Als Monomere für die Diblockcopolymere P(A)-P(B), für die Polymere P'(A) beziehungsweise P'(B) werden bevorzugt die bereits genannten Monomere der Gruppen A und B eingesetzt.

Zumindest ein Diblockcopolymer, bevorzugt mehrere oder alle Diblockcopolymere weisen bevorzugt eine Molmasse $M_n$ zwischen 5.000 und 600.000 g/mol, mehr bevorzugt zwischen 15.000 und 400.000 g/mol, besonders bevorzugt zwischen 30.000 und 300.000 g/mol auf. Sie besitzen vorteilhaft eine Polydispersität $D = M_w/M_n$ von nicht mehr als 3. Es ist günstig, wenn der Anteil der Polymerblöcke P(A) in Bezug auf die Zusammensetzung des Diblockcopolymers zwischen 3 und 50 Gew.-%, bevorzugt zwischen 5 und 35 Gew.-% liegt. Auch die Diblockcopolymere können vorteilhaft eine oder mehrere aufgepfropfte Seitenketten aufweisen.

Typische Einsatzkonzentration von Diblockcopolymeren im Blend betragen bis zu 250 Gewichtsteile auf 100 Gewichtsteile höherer Blockcopolymere enthaltend die Einheit P(A)-P(B)-P(A). Die Polymerblöcke P(A) beziehungsweise P(B) der Diblockcopolymere können als Homo- und auch als Copolymerblöcke aufgebaut sein. Sie werden entsprechend dem oben gesagten vorteilhaft derart gewählt, daß sie mit den Blockcopolymeren P(A) beziehungsweise P(B) der Triblockcopolymere verträglich sind. Die Kettenlänge der Polymerblöcke P(A) beziehungsweise P(B) ist in bevorzugter Weise derart gewählt, daß sie die des mit ihr bevorzugt mischbaren bzw. assoziierbaren Polymerblocks nicht übersteigt, vorteilhaft 10 % niedriger, sehr vorteilhaft 20 % niedriger ist als diese. Der B-Block kann auch so gewählt werden, daß seine Länge die Hälfte der Blocklänge des B-Blocks des Triblockcopolymers nicht übersteigt.

Entsprechendes läßt sich für die Polymere P'(A) beziehungsweise P'(B) sagen. Diese können als Homo- und auch als Copolymere aufgebaut sein. Sie werden entsprechend dem weiter oben gesagten vorteilhaft derart gewählt, daß sie mit den Blockcopolymeren P(A) beziehungsweise P(B) der Triblockcopolymere und/oder der Diblockcopolymere verträglich sind. Die Kettenlänge der Polymere P'(A) beziehungsweise P'(B) ist in bevorzugter Weise derart gewählt, daß sie die des mit ihr bevorzugt mischbaren bzw. assoziierbaren Polymerblocks nicht übersteigt, vorteilhaft 10 % niedriger, sehr vorteilhaft 20 % niedriger ist als diese.

Zur Herstellung der Blockcopolymere können prinzipiell alle kontrolliert oder lebend verlaufenden Polymerisationen eingesetzt werden, ebenso auch Kombinationen verschiedener kontrollierter Polymerisationsverfahren. Hierbei seien z. B., ohne den Anspruch auf Vollständigkeit zu besitzen, neben der anionischen Polymerisation die ATRP, die Nitroxid/TEMPO- kontrollierte Polymerisation oder mehr bevorzugt der RAFT-Prozess genannt, also insbesondere solche Verfahren, die eine Kontrolle der Blocklängen, Polymerarchitektur oder auch, aber nicht notwendigerweise, der Taktizität der Polymerkette erlauben.

Radikalische Polymerisationen können in Gegenwart eines organischen Lösungsmittels oder in Gegenwart von Wasser oder in Gemischen aus organischen Lösungsmitteln und/oder organischer Lösungsmittel mit Wasser oder in Substanz durchgeführt werden. Bevorzugt wird so wenig Lösungsmittel wie möglich eingesetzt. Die Polymerisationszeit für radikalische Prozesse beträgt - je nach Umsatz und Temperatur - typischerweise zwischen 4 und 72 h.

Bei der Lösungsmittelpolymerisation werden als Lösemittel vorzugsweise Ester gesättigter Carbonsäuren (wie Ethylacetat), aliphatische Kohlenwasserstoffe (wie n-Hexan, n-Heptan oder Cyclohexan), Ketone (wie Aceton oder Methylethylketon), Siedegrenzenbenzin, aromatische Lösungsmittel wie Toluol oder Xylol oder Gemische vorgenannter Lösungsmittel verwendet. Für die Polymerisation in wäßrigen Medien beziehungsweise Gemischen aus organischen und wäßrigen Lösungsmitteln werden zur Polymerisation bevorzugt Emulgatoren und Stabilisatoren zugesetzt. Wählt man eine Methode der radikalischen Polymerisation werden als Polymerisationsinitiatoren vorteilhaft übliche radikalbildende Verbindungen wie beispielsweise Peroxide, Azoverbindungen und Peroxosulfate eingesetzt. Auch Initiatorengemische eignen sich hervorragend.

Zur Radikalstabilisierung werden in günstiger Vorgehensweise Nitroxide des Typs (VIIa) oder (VIIb) eingesetzt:

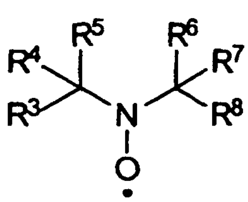

(VIIa)

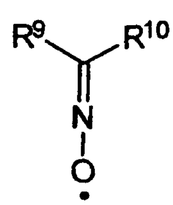

(VIIb)

wobei $R^3$, $R^4$, $R^5$, $R^6$, $R^7$, $R^8$, $R^9$, $R^{10}$ unabhängig voneinander folgende Verbindungen oder Atome bedeuten:

i) Halogenide, wie z.B. Chlor, Brom oder Iod
ii) lineare, verzweigte, cyclische und heterocyclische Kohlenwasserstoffe mit 1 bis 20 Kohlenstoffatomen, die gesättigt, ungesättigt oder aromatisch sein können,
iii) Ester $-COOR^{11}$, Alkoxide $-OR^{12}$ und/oder Phosphonate $-PO(OR^{13})_2$, wobei $R^{11}$, $R^{12}$ und $R^{13}$ für Reste aus der Gruppe ii) stehen.

Verbindungen der Formel (VIIa) oder (VIIb) können auch an Polymerketten jeglicher Art gebunden sein (vorrangig in dem Sinne, daß zumindest einer der oben genannten Reste eine derartige Polymerkette darstellt) und somit zum Aufbau der Blockcopolymere als Makroradikale oder Makroregler genutzt werden.
Mehr bevorzugt werden als kontrollierte Regler für die Polymerisation Verbindungen des Typs:

- 2,2,5,5-Tetramethyl-1-pyrrolidinyloxyl (PROXYL), 3-Carbamoyl-PROXYL, 2,2-dimethyl-4,5-cyclohexyl-PROXYL, 3-oxo-PROXYL, 3-Hydroxylimine-PROXYL, 3-Aminomethyl-PROXYL, 3-Methoxy-PROXYL, 3-t-Butyl-PROXYL, 3,4-Di-t-butyl-PROXYL
- 2,2,6,6-Tetramethyl-1-piperidinyloxy pyrrolidinyloxyl (TEMPO), 4-Benzoyloxy-TEMPO, 4-Methoxy-TEMPO, 4-Chloro-TEMPO, 4-Hydroxy-TEMPO, 4-Oxo-TEMPO, 4-Amino-TEMPO, 2,2,6,6,-Tetraethyl-1-piperidinyloxyl, 2,2,6-Trimethyl-6-ethyl-1-piperidinyloxyl
- N-tert.-Butyl-1-phenyl-2-methyl propyl Nitroxid
- N-tert.-Butyl-1-(2-naphtyl)-2-methyl propyl Nitroxid
- N-tert.-Butyl-1-diethylphosphono-2,2-dimethyl propyl Nitroxid
- N-tert.-Butyl-1-dibenzylphosphono-2,2-dimethyl propyl Nitroxid
- N-(1-Phenyl-2-methyl propyl)-1-diethylphosphono-1-methyl ethyl Nitroxid
- Di-t-Butylnitroxid
- Diphenylnitroxid
- t-Butyl-t-amyl Nitroxid

verwendet.
Eine Reihe weiterer Polymerisationsmethoden, nach denen die Haftklebemassen in alternativer Vorgehensweise hergestellt werden können, lassen sich aus dem Stand der Technik wählen:
US 4,581,429 A offenbart ein kontrolliert radikalisches Polymerisationsverfahren, das als Initiator eine Verbindung der Formel R'R"N-O-Y anwendet, worin Y eine freie radikalische Spezies ist, die ungesättigte Monomere polymerisieren kann. Die Reaktionen weisen aber im allgemeinen geringe Umsätze auf. Besonders problematisch ist die Polymerisation von Acrylaten, die nur zu sehr geringen Ausbeuten und Molmassen abläuft. WO 98/13392 A1 beschreibt offenkettige Alkoxyaminverbindungen, die ein symmetrisches Substitutionsmuster aufweisen. EP 735 052 A1 offenbart ein Verfahren zur Herstellung thermoplastischer Elastomere mit engen Molmassenverteilungen. WO 96/24620 A1 beschreibt ein Polymerisationsverfahren, bei dem sehr spezielle Radikalverbindungen wie z. B. phosphorhaltige Nitroxide, die auf Imidazolidin basieren, eingesetzt werden. WO 98/44008 A1 offenbart spezielle Nitroxyle, die auf Morpholinen, Piperazinonen und Piperazindionen basieren. DE 199 49 352 A1 beschreibt heterozyklische Alkoxyamine als Regulatoren in kontrolliert radikalischen Polymerisationen. Entsprechende Weiterentwicklungen der Alkoxyamine bzw. der korrespondierenden freien Nitroxide verbessern die Effizienz zur Herstellung von Polyacrylaten (Hawker, Beitrag zur Hauptversammlung der American Chemical Society, Frühjahr 1997; Husemann, Beitrag zum IUPAC World-Polymer Meeting 1998, Gold Coast).
Als weitere kontrollierte Polymerisationsmethode läßt sich in vorteilhafter Weise zur Synthese der Blockcopolymere die Atom Transfer Radical Polymerization (ATRP) einsetzen, wobei als Initiator bevorzugt monofunktionelle oder difunktionelle sekundäre oder tertiäre Halogenide und zur Abstraktion des(r) Halogenids(e) Cu-, Ni-, Fe-, Pd-, Pt-, Ru-, Os-, Rh-, Co-, Ir-, Ag- oder Au-Komplexe (EP 0 824 111 A1; EP 826 698 A1; EP 824 110 A1; EP 841 346 A1; EP 850 957 A1) eingesetzt werden. Die unterschiedlichen Möglichkeiten der ATRP sind ferner in den Schriften US 5,945,491 A, US 5,854,364 A und US 5,789,487 A beschrieben.
Weiterhin vorteilhaft kann das erfindungsgemäße genutzte Blockcopolymer über eine anionische Polymerisation hergestellt werden. Hier werden als Reaktionsmedium bevorzugt inerte Lösungsmittel verwendet, wie z.B. aliphatische und cycloaliphatische Kohlenwasserstoffe, oder auch aromatische Kohlenwasserstoffe.
Das lebende Polymer wird im allgemeinen durch die Struktur $P_L(A)$-Me repräsentiert, wobei Me ein Metall der Gruppe I des Periodensystems, wie z.B. Lithium, Natrium oder Kalium, und $P_L(A)$ ein wachsender Polymerblock aus den Monomeren A ist. Die Molmasse des herzustellenden Polymerblocks wird durch das Verhältnis von Initiatorkonzentration zu Monomerkonzentration vorgegeben. Zum Aufbau der Blockstruktur werden zunächst die Monomere A für den Aufbau eines Polymerblocks P(A) hinzugegeben, dann wird anschließend durch Zugabe der Monomere B ein Polymerblock P(B) angeknüpft und nachfolgend durch erneute Zugabe von Monomeren A ein weiterer Polymerblock P(A) anpolymerisiert, so daß ein Triblockcopolymer P(A)-P(B)-P(A) entsteht. Alternativ kann P(A)-P(B)-M durch

eine geeignete difunktionelle Verbindung gekuppelt werden. Auf diesem Weg sind auch Sternblockcopolymere (P(B) -P(A))$_n$ zugänglich. Als geeignete Polymerisationsinitiatoren eignen sich z. B. n-Propyllithium, n-Butyllithium, sec-Butyllithium, 2-Naphthyllithium, Cyclohexyllithium oder Octyllithium, wobei diese Aufzählung nicht den Anspruch auf Vollständigkeit besitzt. Ferner sind Initiatoren auf Basis von Samarium-Komplexen zur Polymerisation von Acrylaten bekannt (Macromolecules, 1995, 28, 7886) und hier einsetzbar.

Weiterhin lassen sich auch difunktionelle Initiatoren einsetzen, wie beispielsweise 1,1,4,4-Tetraphenyl-1,4-dilithiobutan oder 1,1,4,4-Tetraphenyl-1,4-dilithioisobutan. Coinitiatoren lassen sich ebenfalls einsetzen. Geeignete Coinitiatoren sind unter anderem Lithiumhalogenide, Alkalimetallalkoxide oder Alkylaluminium-Verbindungen. In einer sehr bevorzugten Version sind die Liganden und Coinitiatoren so gewählt, daß Acrylatmonomere, wie z.B. n-Butylacrylat und 2-Ethylhexylacrylat, direkt polymerisiert werden können und nicht im Polymer durch eine Umesterung mit dem entsprechenden Alkohol generiert werden müssen.

Als sehr bevorzugter Herstellprozeß wird eine Variante der RAFT-Polymerisation (reversible addition-fragmentation chain transfer polymerization) durchgeführt. Der Polymerisationsprozeß ist z. B. in den Schriften WO 98/01478 A1 und WO 99/31144 A1 ausführlich beschrieben. Zur Herstellung von Triblockcopolymeren eignen sich besonders vorteilhaft Trithiocarbonate der allgemeinen Struktur $R'''$-S-C(S)-S-$R'''$ (Macromolecules 2000, 33, 243-245), mittels derer in einem ersten Schritt Monomere für die Endblöcke P(A) polymerisiert werden. In einem zweiten Schritt wird anschließend der Mittelblock P(B) synthetisiert. Nach der Polymerisation der Endblöcke P(A) kann die Reaktion abgebrochen und reinitiiert werden. Ferner kann auch ohne Reaktionsunterbrechung sequentiell polymerisiert werden. In einer sehr vorteilhaften Variante werden beispielsweise die Trithiocarbonate (VIII) und (IX) oder die Thioverbindungen (X) und (XI) zur Polymerisation eingesetzt, wobei $\phi$ ein Phenylring, der unfunktionalisiert oder durch Alkyl- oder Arylsubstituenten, die direkt oder über Ester- oder Etherbrücken verknüpft sind, funktionalisiert sein kann, oder eine Cyanogruppe sein kann, oder einen gesättigten oder ungesättgten aliphatischen Rest sein kann. Der Phenylring $\phi$ kann optional einen oder mehrere Polymerblöcke, beispielsweise Polybutadien, Polyisopren, Polychloropren oder Poly (meth)acrylat, das entsprechend der Definition für P(A) oder P(B) aufgebaut sein kann, oder Polystyrol tragen, um nur einige zu nennen. Funktionalisierungen können beispielsweise Halogene, Hydroxygruppen, Epoxidgruppen, stickstoff- oder schwefelenthaltende Gruppen sein, ohne daß diese Liste Anspruch auf Vollständigkeit erhebt.

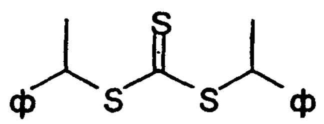

(VIII)

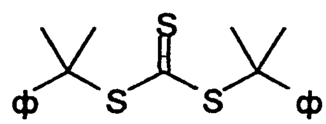

(IX)

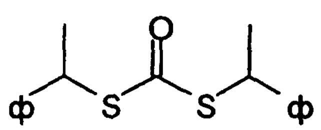

(X)

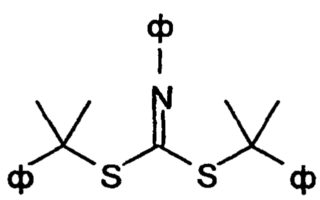

(XI)

Außerdem können Thioester der allgemeinen Struktur $R^{IV}$-C(S)-S-$R^{V}$ zum Einsatz kommen, insbesondere, um asymmetrische Systeme herzustellen. Dabei können $R^{IV}$ und $R^{V}$ unabhängig von einander gewählt werden und $R^{IV}$ ein Rest aus einer der folgenden Gruppen i) bis iv) und $R^{V}$ ein Rest aus einer der folgenden Gruppen i) bis iii) sein kann:

i) $C_1$- bis $C_{18}$-Alkyl, $C_2$- bis $C_{18}$ Alkenyl, $C_2$- bis $C_{18}$-Alkinyl, jeweils linear oder verzweigt; Aryl-, Phenyl-, Benzyl-, aliphatische und aromatische Heterozyklen.
ii) -$NH_2$, -NH-$R^{VI}$, -$NR^{VI}R^{VII}$, -NH-C(O)-$R^{VI}$, -$NR^{VI}$-C(O)-$R^{VII}$, -NH-C(S)-$R^{VI}$, -$NR^{VI}$-C(S)-$R^{VII}$,

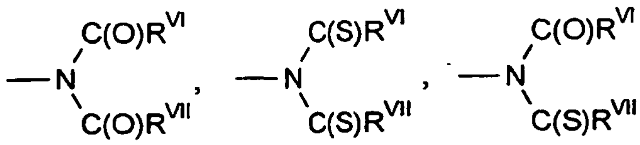

wobei $R^{VI}$ und $R^{VII}$ unabhängig voneinander gewählte Reste aus der Gruppe i) sind.
iii) $-S-R^{VIII}$, $-S-C(S)-R^{VIII}$, wobei $R^{VIII}$ ein Rest aus einer der Gruppen i) oder ii) sein kann.
iv) $-O-R^{VIII}$, $-O-C(O)-R^{VIII}$, wobei $R^{VIII}$ ein Rest gewählt aus einer der Gruppen i) oder ii) sein kann.

In Verbindung mit den obengenannten kontrolliert radikalisch verlaufenden Polymerisationen werden Initiatorsysteme bevorzugt, die zusätzlich weitere radikalische Initiatoren zur Polymerisation enthalten, insbesondere thermisch zerfallende radikalbildende Azo-oder Peroxoinitiatoren. Prinzipiell eignen sich hierfür jedoch alle für Acrylate bekannten üblichen Initiatoren. Die Produktion von C-zentrierten Radikalen ist im Houben-Weyl, Methoden der Organischen Chemie, Vol. E19a, S. 60ff beschrieben. Diese Methoden werden in bevorzugter Weise angewendet. Beispiele für Radikalquellen sind Peroxide, Hydroperoxide und Azoverbindungen. Als einige nicht ausschließliche Beispiele für typische Radikalinitiatoren seinen hier genannt: Kaliumperoxodisulfat, Dibenzoylperoxid, Cumolhydroperoxid, Cyclohexanonperoxid, Cyclohexylsulfonylacetylperoxid, Di-tert-butylperoxid, Azodiisobutyronitril, Diisopropylpercarbonat, tert-Butylperoctoat, Benzpinacol. In einer sehr bevorzugten Variante wird als radikalischer Initiator 1,1'-Azo-bis-(cyclohexylnitril) (Vazo 88®, DuPont®) oder 2,2-Azo-bis-(2-methylbutannitril) (Vazo 67®, DuPont®) verwendet. Weiterhin können auch Radikalquellen verwendet werden, die erst unter UV-Bestrahlung Radikale freisetzen.

Beim konventionellen RAFT-Prozess wird zumeist nur bis zu geringen Umsätzen polymerisiert (WO 98/01478 A1), um möglichst enge Molekulargewichtsverteilungen zu realisieren. Durch die geringen Umsätze lassen sich diese Polymere aber nicht als Haftklebemassen und insbesondere nicht als Schmelzhaftkleber einsetzen, da der hohe Anteil an Restmonomeren die klebtechnischen Eigenschaften negativ beeinflußt, die Restmonomere im Aufkonzentrationsprozeß das Lösemittelrecyclat verunreinigen und die entsprechenden Selbstklebebänder ein sehr hohes Ausgasungsverhalten zeigen würden.

Erfindungsgemäß wird das Lösemittel bevorzugt in einem Aufkonzentrationsextruder unter vermindertem Druck abgezogen, wozu beispielsweise Ein- oder Doppelschneckenextruder eingesetzt werden können, die bevorzugt das Lösemittel in verschiedenen oder gleichen Vakuumstufen abdestillieren und über eine Feedvorwärmung verfügen.

Zur vorteilhaften erfindungsgemäßen Weiterentwicklung können den blockcopolymerhaltigen Haftklebemassen Klebharze beigemischt werden. Prinzipiell lassen sich alle in dem entsprechenden Polyacrylatmittelblock P(B) löslichen Harze verwenden. Geeignete Klebharze umfassen unter anderem Kolophonium und Kolophoniumderivate (Kolophoniumester, auch durch z. B. Disproportionierung oder Hydrierung stabilisierte Kolophoniumderivate), Polyterpenharze, Terpenphenolharze, Alkylphenolharze, aliphatische, aromatische und aliphatisch-aromatische Kohlenwasserstoffharze, um nur einige zu nennen. Vorrangig werden Harze gewählt, die vorzugsweise mit dem Elastomerblock verträglich sind. Der Gewichtsanteil der Harze am Blockcopolymer beträgt typischerweise bis zu 40 Gew. %, mehr bevorzugt bis zu 30 Gew. %.

Für eine spezielle Art der Ausführung der Erfindung können auch Harze verwendet werden, die mit dem Polymerblock P(A) verträglich sind.

Weiterhin können optional Weichmacher (Plastifizierungsmittel), Füllstoffe (z. B. Fasern, Ruß, Zinkoxid, Titandioxid, Kreide, Voll- oder Hohlglaskugeln, Mikrokugeln aus anderen Materialien, Kieselsäure, Silikate), Keimbildner, Blähmittel, Compoundierungsmittel und/oder Alterungsschutzmittel, z. B. in Form von primären und sekundären Antioxidantien oder in Form von Lichtschutzmitteln zugesetzt werden.

Bevorzugt wird die innere Festigkeit (Kohäsion) der Haftklebemasse durch die physikalische Vernetzung der Polymerblöcke P(A) erzeugt. Die so erhaltene physikalische Vernetzung ist typischerweise thermoreversibel. Für eine nichtreversible Vernetzung können die Haftklebemassen zusätzlich chemisch vernetzt werden. Hierzu können die acrylatblockcopolymerhaltigen Haftklebemassen, welche für die erfindungsgemäßen reversiblen Systeme eingesetzt werden, optional verträgliche Vernetzersubstanzen enthalten. Als Vernetzer eignen sich z. B. Metallchelate, multifunktionelle Isocyanate, multifunktionelle Amine oder multifunktionelle Alkohole. Auch multifunktionelle Acrylate lassen sich vorteilhaft als Vernetzer für eine actinische Bestrahlung verwenden.

Zur optionalen Vernetzung mit UV-Licht werden den polyacrylathaltigen Blockcopolymeren, welche in den erfindungsgemäßen Systemen zum Einsatz kommen, UV-absorbierende Photoinitiatoren zugesetzt. Nützliche Photoinitiatoren, welche sehr gut zu verwenden sind, sind Benzoinether, wie z. B. Benzoinmethylether und Benzoinisopropylether, substituierte Acetophenone, wie z. B. 2,2-Diethoxyacetophenon (erhältlich als Irgacure 651® von Fa. Ciba Geigy®), 2,2-Dimethoxy-2-phenyl-1-phenylethanon, Dimethoxyhydroxyacetophenon, substituierte α-Ketole, wie z. B. 2-Methoxy-2-hydroxypropiophenon, aromatische Sulfonylchloride, wie z. B. 2-Naphthyl sulfonylchlorid, und photoaktive Oxime, wie z. B. 1-Phenyl-1,2-propandion-2-(O-ethoxycarbonyl)oxim.

Die oben erwähnten und weitere einsetzbare Photoinititatioren und andere vom Typ Norrish I oder Norrish II können folgenden Reste enthalten: Benzophenon-, Acetophenon-, Benzil-, Benzoin-, Hydroxyalkylphenon-, Phenylcyclohexylketon-, Anthrachinon-, Trimethylbenzoylphosphinoxid-, Methylthiophenylmorpholinketon-, Aminoketon-, Azobehzoin-, Thioxanthon-, Hexarylbisimidazol-, Triazin-, oder Fluorenon, wobei jeder dieser Reste zusätzlich mit einem oder mehreren Halogenatomen und/oder einer oder mehreren Alkyloxygruppen und/oder einer oder mehreren Aminogruppen oder Hydroxygruppen substituiert sein kann. Ein repräsentativer Überblick wird von Fouassier: "Photoinititation, Photopolymerization and Photocuring: Fundamentals and Applications", Hanser-Verlag, München 1995, gegeben. Ergänzend kann Carroy et al. in "Chemistry and Technology of UV and EB Formulation for Coatings, Inks and Paints", Oldring (Hrsg.), 1994, SITA, London zu Rate gezogen werden.

Weiterhin wird ein Verfahren zur Herstellung orientierter Haftklebesysteme auf Basis oben beschriebener Blockcopolymere beansprucht, welches insbesondere hervorragend geeignet ist, die erfinderischen haftklebenden Systeme herzustellen. Hierbei wird die Haftklebemasse aus der Schmelze beschichtet, insbesondere indem sie dabei gereckt wird.

Die Beschichtung erfolgt vorteilhaft durch eine Schmelzdüse oder durch eine Extrusionsdüse auf ein Trägermaterial, wobei die Orientierung durch Reckung des Haftklebebandfilms erzeugt wird.

Die Extrusionsbeschichtung erfolgt dabei bevorzugt durch eine Extrusionsdüse. Extrusionsdüsen kann man in drei Kategorien unterteilen: T-Düse, Fischschwanz-Düse und Bügel-Düse. Die einzelnen Typen unterscheiden sich durch die Gestalt ihres Fließkanals. Zur Herstellung von orientierten Acrylathotmelt-Blockcopolymerhaftklebemassen, insbesondere der oben beschriebenen haftklebenden Systeme, wird bevorzugt mit einer Bügeldüse auf einen Träger beschichtet, und zwar derart, daß durch eine Relativbewegung von Düse zu Träger eine Polymerschicht auf dem Träger entsteht. Bei der Extrusionsdüsenbeschichtung ist die Spaltbreite der Düse am Austritt größer als die Schichtdicke des beschichteten Haftklebemassenfilms. Die Orientierung entsteht somit durch eine Reckung. Die Orientierung der Haftklebemasse bleibt nach der Beschichtung durch die Selbstorganisation der Haftklebemasse erhalten, d.h. es bildet sich ein physikalisches Netzwerk aus Hartblockdomänen P(A). In analoger Weise kann eine Orientierung von Acrylatblockcopolymerhaftklebemassen auch mit der Schmelzdüsenbeschichtung erzeugt werden.

Die Ausprägung der Orientierung innerhalb der Haftklebemassen ist sowohl von der Düsen- und Beschichtungstemperatur als auch von der Temperatur des Trägermaterials abhängig. Die besten Orientierungseffekte werden durch das Ablegen auf einer kalten Oberfläche erzielt. Daher sollte das Trägermaterial durch eine Walze während der Beschichtung direkt gekühlt werden. Die Kühlung der Walze kann durch einen Flüssigkeitsfilm von außen oder von innen oder durch ein kühlendes Gas erfolgen. Weiterhin sollte zur Erzielung eines hohen Orientierungsgrades die Beschichtungs- und Düsentemperatur herabgesetzt werden. Der Grad der Orientierung ist durch die Düsenspaltbreite frei einstellbar. Je dicker der Haftklebemassenfilm ist, der aus der Extrusionsdüse herausgedrückt wird, desto stärker kann die Klebemasse auf einen dünneren Haftklebemassenfilm auf dem Trägermaterial gereckt werden. Dieser Reckungsvorgang kann neben der frei einstellbaren Düsenbreite auch durch die Bahngeschwindigkeit des abnehmenden Trägermaterials frei eingestellt werden. Durch den Beschichtungsvorgang wird die Klebemasse orientiert.

Weiterhin kann durch das Design der Schmelz- bzw. Extrusionsdüse ebenfalls das Maß der Orientierung gesteuert werden. In diesem Zusammenhang sind auch die Beschichtungsgeschwindigkeiten zu nennen, da bei höheren Geschwindigkeiten ebenfalls ein höheres Schergefälle eingebracht wird und somit die Orientierung verstärkt wird.

Die Anisotropie kann auch nachträglich durch Streckung einer Acrylathaftklebemasse auf einem dehnbaren Träger erzeugt werden. Die Streckung kann sowohl mono- als auch biaxial erfolgen.

Außer durch das Verfahren läßt sich die Orientierung auch durch die Zusammensetzung der Blockcopolymere steuern. Generell steigt das Maß der Orientierung mit steigendem gesamten Molekulargewicht, mit steigendem Hartblockdomänenanteil P(A) sowie mit steigender Polarität des Mittelblocks P(B) jeweils bei gleicher Beschichtungstemperatur, -geschwindigkeit und Reckverhältnis.

Die reinen oder abgemischten orientierten Acrylathotmelts werden auf einen Träger beschichtet. Als Trägermaterial sind prinzipiell BOPP, PET, Vlies, PVC, Metallfolien, Schaum oder Trennpapiere (Glassine, HDPE, LDPE) geeignet. Zur Bestimmung des Rückschrumpfes im freien Film empfiehlt sich die Beschichtung auf ein Trennpapier oder eine Trennfolie. Ansonsten können alle dem Fachmann geläufigen Trägermaterialien zur Herstellung von Transfertapes, einseitigen und doppelseitigen Haftklebebändern eingesetzt werden.

Die Messung der Orientierung der Klebemasse kann mit einem Polarimeter, mit Infrarot-Dichroismus oder mit Röntgenstreuung erfolgen. Eine weitere für die erfinderischen Haftklebemassen besonders bevorzugte Methode ist die Messung des Rückschrumpfes im freien Film. Diese Messmethoden sind im Detail unter den experimentellen Testmethoden (Methode D) beschrieben.

Prinzipiell ist es auch möglich, die erfindungsgemäß eingesetzten Haftklebemassen mit Elektronenstrahlen zu vernetzen. Typische Bestrahlungsvorrichtungen, die zum Einsatz kommen können, sind Linearkathodensysteme, Scannersysteme bzw. Segmentkathodensysteme, sofern es sich um Elektronenstrahlbeschleuniger handelt. Eine ausführliche Beschreibung des Stands der Technik und die wichtigsten Verfahrensparameter findet man bei Skelhorne,

Electron Beam Processing, in Chemistry and Technology of UV and EB formulation for Coatings, Inks and Paints, Vol. 1, 1991, SITA, London. Die typischen Beschleunigungsspannungen liegen im Bereich zwischen 50 kV und 500 kV, vorzugsweise 80 kV und 300 kV. Die angewandten Streudosen bewegen sich zwischen 5 bis 150 kGy, insbesondere zwischen 20 und 100 kGy.

Weiterhin ist Inhalt der Erfindung die Verwendung dieser orientierten Haftklebemassen zur Herstellung und Verwendung als ein- und doppelseitige Haftklebebänder sowie als Transfer-Tapes.

Beispielhafte Produktaufbauten für die erfindungsgemäßen haftklebrigen Systeme können vorteilhaft sein:

Haftklebesysteme mit einem einschichtigen Produktaufbau, wobei die Schicht aus einer Haftklebemasse entsprechend der vorstehenden Beschreibung besteht;
Haftklebesysteme mit einem mehrschichtigen Produktaufbau, insbesondere einen zwei-oder dreischichtigen Produktaufbau, wobei zumindest eine der Schichten aus einer Haftklebemasse entsprechend der vorstehenden Beschreibung besteht und bevorzugt eine Dicke von mindestens 10 µm, besonders bevorzugt von mindestens 25 µm aufweist, und wobei bevorzugt eine der weiteren Schichten aus einem Elastomer besteht, Haftklebesysteme mit zumindest einer Trägerschicht.

Besonders vorteilhaft lassen sich die erfindungsgemäßen Haftklebesysteme zur Herstellung von Stanzprodukten verwenden. Das Stanzprodukt kann dabei aus einem ein- oder beidseitig mit einer anisotropen Haftklebemasse beschichteten Trägermaterial hergesetllt werden.

Derartige Stanzlinge können als ein- oder doppelseitig klebende Etiketten, zum Verkleben im Haushalt und in der Industrie, besonders im Automobilbau, für alle Montagezwecke, im medizinischen Bereich (Pflaster, Wundabdeckungen) und dergleichen verwendet werden, um nur einige Anwendungsbeispiele zu nennen. Die Stanzlinge sind generell überall dort einsetzbar, wo Klebeetiketten und Klebefolien zur Verwendung kommen. Besonders geeignet sind die Stanzprodukte dort, wo auf einen sauberen, unbeschädigten Rand des Stanzlings Wert gelegt wird.

Weitere mögliche Haftklebebandanwendungen sind im folgenden beschrieben. Bei Verklebungen von Kabelbäumen im Motorraum treten z.T. sehr hohe Temperaturunterschiede auf. Daher können acrylatblockcopolymerhaltige Haftklebebänder für solche Anwendungen vorteilhaft eingesetzt werden. Im Gegensatz zu einer handelsüblichen Haftklebemasse wird sich eine orientierte Haftklebemasse bei Erwärmung durch den beschriebenen und gemessenen Rückschrumpf zusammenziehen und somit einen festen Verbund aus den Kabeln und dem dämmenden Vlies bilden (Schrumpfkleber).
Weiterhin kann man sich den rückschrumpfenden Effekt bei Verklebungen von gewölbten Oberflächen zunutze machen. Durch Aufbringen eines Haftklebebandes auf eine gewölbte Oberfläche mit anschließender Erhitzung zieht sich das Haftklebeband zusammen und gleicht sich somit der Wölbung des Substrates an. Auf dieser Weise wird die Verklebung deutlich erleichtert und die Anzahl der Lufteinschlüsse zwischen Substrat und Klebeband deutlich verringert. Die Haftklebemasse kann die optimale Wirkung aufbringen. Dieser Effekt kann durch ein orientiertes Trägermaterial noch unterstützt werden. Nach der Applikation schrumpft unter Erhitzung sowohl das Trägermaterial und die orientierte Haftklebemasse, so daß die Verklebungen auf der Wölbung vollkommen spannungsfrei sind.

Die erfindungsgemäßen Haftklebemassen bieten ebenfalls einen weiten Bereich für Anwendungen, die Vorteile der geringen Dehnung in Längsrichtung sowie der Möglichkeit des Rückschrumpfes in einer vorteilhaften Weise ausnutzen.
Auch die Eigenschaft der Vordehnung der Haftklebemassen lässt sich hervorragend nutzen. Ein weiteres beispielhaftes Einsatzgebiet für solche hochorientierten Acrylathaftklebemassen sind stripbare doppelseitige Verklebungen. Im Gegensatz zu herkömmlichen Stripprodukten ist die orientierte Haftklebemasse bereits zu mehreren 100 %ten vorgedehnt, so daß zur Entfernung der doppelseitigen Verklebung die Haftklebemasse in Verstreckungsrichtung nur noch um wenige Prozent gedehnt werden muss. In besonders bevorzugter Weise werden diese Produkte mit einer Schichtdicke von mehreren 100 µm hergestellt.

***Experimente***

Folgende Testmethoden wurden angewendet, um die klebtechnischen Eigenschaften der hergestellten Haftklebesysteme zu evaluieren.

Testmethoden

180° Klebkrafttest (Test A)

Ein 20 mm breiter Streifen einer auf silikonisiertem Trennpapier beschichtete Haftklebemasse wurde auf eine 25 µm dicke mit einem Saran Primer versehende PET-Folie umlaminiert und anschließend dieses Haftklebebandmuster auf eine Stahlplatte aufgebracht. Der Haftklebestreifen wurde zweimal mit einem 2 kg Gewicht auf das Substrat aufgedrückt. Das Klebeband wurde anschließend sofort mit 30 mm/min und im 180° Winkel vom Substrat abgezogen. Die Stahlplatten wurden zweimal mit Aceton und einmal mit Isopropanol gewaschen. Die Messergebnisse sind in N/cm angegeben und sind gemittelt aus drei Messungen. Alle Messungen wurden bei Raumtemperatur unter klimatisierten Bedingungen durchgeführt.

Messung der Doppelbrechung (Test B)

Version 1

Ein Spektralphotometer Modell Uvikon 910 wurde im Probenstrahl mit zwei gekreuzten Polarisationsfiltern versehen. Orientierte Acrylate wurden zwischen zwei Objektträgern fixiert. Die Schichtdicke der orientierten Probe wurde aus Vorversuchen mittels Dickentaster ermittelt. Die derart vorbereitete Probe wurde im Meßstrahl des Spetralphotometers derart plaziert, daß ihre Orientierungsrichtung um jeweils 45° von den optischen Achsen der beiden Polarisationsfilter abwich. Mittels einer zeitaufgelösten Messung wurde dann die Transmission über die Zeit verfolgt. Aus den Transmissionsdaten wurde dann die Doppelbrechung gemäß folgender Beziehung ermittelt:

$$T = sin^2(\pi\ x\ R)$$

Die Retardation R setzt sich wie folgt zusammen:

$$R = \frac{d}{\lambda}\Delta n$$

Die Transmission ergibt sich weiterhin aus

$$T = \frac{I_t}{I_0}$$

Daraus folgt letztendlich für die Doppel-brechung

$$\Delta n = \frac{\lambda}{\pi d}\arcsin\sqrt{T}.$$

In den Formeln bedeuten:

d = Probendicke
$\lambda$ = Wellenlänge
$I_t$ = Intensität des austretenden (durchgelassenen) Lichtstrahls
$I_0$ = Intensität des einfallenden Lichtstrahls

Version 2

Die Messung der Doppelbrechung erfolgte mit einem Versuchsaufbau, wie er analog in der Encyclopedia of Polymer Science, John Wiley & Sons, Vol. 10, S. 505, 1987 als Circular-Polariskop beschrieben ist. Das ausgesendete Licht eines diodengepumpten Festkörperlasers mit der Wellenlänge $\lambda$ = 532 nm wird zunächst durch ein Polarisationsfilter linear polarisiert und dann unter Verwendung einer $\lambda$/4-Platte mit $\lambda$ = 532 nm zirkular polarisiert. Dieser derart polarisierte Laserstrahl wird sodann durch die orientierte Acrylatmasse geführt. Da Acrylatmassen hochtransparent sind, kann der Laserstrahl die Masse praktisch ungehindert passieren. Sind die Polymermoleküle der Acrylatmasse orientiert, so hat dies eine Änderung der Polarisierbarkeit der Acrylatmasse je nach Beobachtungswinkel zur Folge (Doppelbrechung). Der elektrische Feldvektor des zirkular polarisierten Laserstrahles erfährt durch diesen Effekt eine Drehung um die Fortschreitungsachse des Laserstrahles. Nach Verlassen der Probe wird der derart manipulierte Laserstrahl durch eine zweite $\lambda$/4-Platte mit $\lambda$ = 532 nm geführt, deren optische Achse um 90° von der optischen Achse der ersten $\lambda$/4-Platte abweicht. Nach diesem Filter schließt sich ein zweiter Polarisationsfilter an, der ebenfalls um 90°

vom ersten Polaroidfilter abweicht. Schließlich wird die Intensität des Laserstrahles mit einem Photosensor vermessen.

Gelpermeationschromatograpie (GPC) (Test C)

Die Bestimmung der mittleren Molekulargewichte $M_n$ (Zahlenmittel) und $M_w$ (Gewichtsmittel) und der Polydispersität D erfolgte durch Gelpermeationschromatographie. Als Eluent wurde THF mit 0,1 Vol.-% Trifluoressigsäure eingesetzt. Die Messung erfolgte bei 25 °C. Als Vorsäule wurde PSS-SDV, 5 μ, $10^3$ Å, ID 8,0 mm x 50 mm verwendet. Zur Auftrennung wurden die Säulen PSS-SDV, 5 μ, $10^3$ sowie $10^5$ und $10^6$ mit jeweils ID 8,0 mm x 300 mm eingesetzt. Die Probenkonzentration betrug 4 g/l, die Durchflußmenge 1,0 ml pro Minute. Es wurde gegen Polystyrol-Standards gemessen.

Messung des Rückschrumpfes (Test D)

Zur Messung des Rückschrumpfes wurde die Haftklebemasse aus der Schmelze durch eine Düse auf ein silikonisertes Trennpapier beschichtet. Parallel zur Beschichtungsrichtung des Hotmelts wurden Streifen von mindestens 30 mm Breite und 20 cm Länge geschnitten. Bei Masseaufträgen von 130 g/$m^2$ wurden je 3 Streifen, bei 50 g/$m^2$ 8 Streifen übereinander laminiert, um vergleichbare Schichtdicken zu erhalten. Der derart erhaltene Körper wurde dann auf exakt 20 mm Breite geschnitten und an den jeweiligen Enden in einem Abstand von 15 cm mit Papierstreifen überklebt. Der auf diese Weise präparierte Prüfkörper wurde dann bei RT vertikal aufgehängt und die Änderung der Länge über die Zeit verfolgt, bis keine weitere Schrumpfung der Probe mehr festgestellt werden konnte. Die um den Endwert reduzierte Ausgangslänge wurde dann bezogen auf die Ausganglänge als Rückschrumpf in Prozent angegeben.
Für die Messung der Orientierung nach einem längeren Zeitraum, wurden die beschichteten und orientierten Haftklebemassen über einen längeren Zeitraum als Lappenmuster gelagert und anschließend analog Testmethode D analysiert.

Präparationen

Herstellung eines RAFT-Reglers:

Die Herstellung des Reglers Bis-2,2'-phenylethyltrithiocarbonats erfolgte ausgehend von 2-Phenylethylbromid mit Dischwefelkohlenstoff und Natriumhydroxid nach einer Vorschrift von Synth. Comm., 1988, 18 (13), 1531. Ausbeute 72 %. $^1$H-NMR ($CDCl_3$), δ: 7,20-7,40 ppm (m, 10 H); 3,81 ppm (m, 1 H); 3,71 ppm (m, 1 H); 1,59 ppm (d, 3 H); 1,53 ppm (d, 3 H).

Herstellung von Polystyrol (A):

In einem für die radikalische Polymerisation konventionellem 2 L Reaktor werden unter Stickstoffatmosphäre 362 g Styrol und 3,64 g Regler Bis-2,2'-phenylethyltrithiocarbonat vorgelegt. Es wird auf 110 °C Innentemperatur erhitzt und mit 0,15g Vazo 67® (DuPont) initiiert. Nach 10 Stunden Reaktionszeit werden 100 g Toluol hinzugegeben. Nach 24 Stunden Reaktionszeit wird mit weiteren 0,1 g Vazo 67® initiiert und weitere 24 Stunden polymerisiert. Während der Polymerisation steigt die Viskosität merklich an. Zur Kompensation werden 150 g Toluol als Endverdünnung nach 48 Stunden hinzugegeben.
Zur Aufreinigung wurde das Polymer in 4.5 Liter Methanol gefällt, über eine Fritte abfiltriert und anschließend im Vakuumtrockenschrank getrocknet.
Die Durchführung der Gelpermeationschromatographie (Test C) gegen Polystyrol Standards ergab $M_n$ = 29300 g/mol und $M_w$ = 35500 g/mol.

Herstellung von Polystyrol (B):

In einem für die radikalische Polymerisation konventionellem 2 L Reaktor werden unter Stickstoffatmosphäre 1500 g Styrol und 9,80 g Regler Bis-2,2'-phenylethyltrithiocarbonat vorgelegt. Es wird auf 120 °C Innentemperatur erhitzt und mit 0,1 g Vazo 67® (DuPont) initiiert. Nach 24 Stunden Reaktionszeit werden 200 g Toluol hinzugegeben. Nach 36 Stunden Reaktionszeit werden weitere 200 g Toluol hizugegeben. Während der Polymerisation steigt die Viskosität merklich an. Nach 48 Stunden wird die Polymerisation abgebrochen.
Zur Aufreinigung wurde das Polymer in 4,5 Liter Methanol gefällt, über eine Fritte abfiltriert und anschließend im Vakuumtrockenschrank getrocknet.
Die Durchführung der Gelpermeationschromatographie (Test C) gegen Polystyrol-Standards ergab $M_n$ = 36.100 g/mol

und $M_w$ = 44.800 g/mol.

Herstellung der Proben

Beispiel 1

Ein für radikalische Polymerisationen konventioneller Reaktor wurde mit 32 g Trithiocarbonat-funktionalisiertem Polystyrol (A), 442 g 2-Ethylhexylacrylat, 35 g Acrylsäure und 0,12 g Vazo 67™ (Fa. DuPont) befüllt. Nach 20 Minuten Durchleiten von Argon und zweimaligen Entgasen wurde der Reaktor unter Rühren auf 70 °C hochgeheizt und für 24 h polymerisiert. Nach Beendigung der Polymerisation durch Abkühlung auf Raumtemperatur wurde zur Isolierung des Hotmelts in einem Vakuumtrockenschrank bei 50°C und 10 mm Druck das Lösemittel entfernt. Die Durchführung der Gelpermeationschromatographie (Test C) gegen Polystyrolstandards ergab $M_n$ = 114.400 g/mol und $M_w$ = 217.000 g/mol.
Anschließend wurde der Hotmelt mit einen Haake Extruder bestehend aus Haake Rheocord®, Haake Rheomex® und Haake RF 1 Roll Feeder® und einer Bügeldüse mit 300 µm Spaltbreite bei verschiedenen Temperaturen auf ein silikonisiertes Trennpapier mit 50 g/$m^2$ beschichtet.
Es wurden die Testmethoden A und D durchgeführt.

Beispiel 2

Ein für radikalische Polymerisationen konventioneller Reaktor wurde mit 32 g Trithiocarbonat-funktionalisiertem Polystyrol (A), 442 g 2-Ethylhexylacrylat, 17 g Acrylsäure und 0,12 g Vazo 67™ (Fa. DuPont) befüllt. Nach 20 Minuten Durchleiten von Argon und zweimaligen Entgasen wurde der Reaktor unter Rühren auf 70 °C hochgeheizt und für 24 h polymerisiert. Nach Beendigung der Polymerisation durch Abkühlung auf Raumtemperatur wurde zur Isolierung des Hotmelts in einem Vakuumtrockenschrank bei 50°C und 10 mm Druck das Lösemittel entfernt. Die Durchführung der Gelpermeationschromatographie (Test C) gegen Polystyrolstandards ergab $M_n$ = 98.400 g/mol und $M_w$ = 185.000 g/mol.
Anschließend wurde der Hotmelt mit einen Haake Extruder bestehend aus Haake Rheocord®, Haake Rheomex® und Haake RF 1 Roll Feeder® und einer Bügeldüse mit 300 µm Spaltbreite bei verschiedenen Temperaturen auf ein silikonisiertes Trennpapier mit 50 g/$m^2$ beschichtet.
Es wurden die Testmethoden A und D durchgeführt.

Beispiel 3

Ein für radikalische Polymerisationen konventioneller Reaktor wurde mit 600 g Trithiocarbonat-funktionalisiertem Polystyrol (A), 2142 g n-Butylacrylat und 1200 g Aceton befüllt. Unter Rühren und Stickstoffgas wurde auf 65 °C Innentemperatur hochgeheizt und 0,1 g Vazo 67™ (Fa. DuPont) hinzugegeben. Der Reaktor wurde unter Rühren auf 70 °C hochgeheizt und für 24 h polymerisiert. Nach Beendigung der Polymerisation durch Abkühlung auf Raumtemperatur wurde zur Isolierung des in einem Vakuumtrockenschrank bei 50 °C und 10 mm Druck das Lösemittel entfernt. Die Durchführung der Gelpermeationschromatographie (Test C) gegen Polystyrolstandards ergab $M_n$ = 72.200 g/mol und $M_w$ = 117.000 g/mol. Anschließend wurde der Hotmelt mit einen Haake Extruder bestehend aus Haake Rheocord®, Haake Rheomex® und Haake RF 1 Roll Feeder® und einer Bügeldüse mit 300 µm Spaltbreite bei verschiedenen Temperaturen auf ein silikonisiertes Trennpapier mit 50 g/$m^2$ beschichtet.
Es wurden die Testmethoden A und D durchgeführt.

Beispiel 4

Ein für radikalische Polymerisationen konventioneller Reaktor wurde mit 700 g Trithiocarbonat-funktionalisiertem Polystyrol (B), 3063 g n-Butylacrylat und 1600 g Aceton befüllt. Unter Rühren und Stickstoffgas wurde auf 65 °C Innentemperatur hochgeheizt und 0,1 g Vazo 67™ (Fa. DuPont) hinzugegeben. Der Reaktor wurde unter Rühren auf 70 °C hochgeheizt und für 24 h polymerisiert. Nach 4 h Reaktionszeit wurde mit 300 g Aceton verdünnt. Nach 19 h wurde wiederum mit 300 g Aceton verdünnt. Nach Beendigung der Polymerisation durch Abkühlung auf Raumtemperatur wurde zur Isolierung des Hotmelts in einem Vakuumtrockenschrank bei 50 °C und 10 mm Druck das Lösemittel entfernt. Die Durchführung der Gelpermeationschromatographie (Test C) gegen Polystyrolstandards ergab $M_n$ = 111.300 g/mol und $M_w$ = 197.000 g/mol.

Anschließend wurde der Hotmelt mit einen Haake Extruder bestehend aus Haake Rheocord®, Haake Rheomex® und Haake RF 1 Roll Feeder® und einer Bügeldüse mit 300 µm Spaltbreite bei verschiedenen Temperaturen auf ein silikonisiertes Trennpapier mit 50 g/$m^2$ beschichtet.

Es wurden die Testmethoden A und D durchgeführt.

Beispiel 5

Ein für radikalische Polymerisationen konventioneller Reaktor wurde mit 744 g Trithiocarbonat-funktionalisiertem Polystyrol (B), 2405 g n-Butylacrylat, 32 g Acrylsäure, 812.5 g Isobornylacrylat und 1500 g Aceton befüllt. Unter Rühren und Stickstoffgas wurde auf 65°C Innentemperatur hochgeheizt und 0,1 g Vazo 67™ (Fa. DuPont) hinzugegeben. Der Reaktor wurde unter Rühren auf 70 °C hochgeheizt und für 24 h polymerisiert. Nach 7 h Reaktionszeit wurde mit 300 g Aceton verdünnt. Nach Beendigung der Polymerisation durch Abkühlung auf Raumtemperatur wurde zur Isolierung des Hotmelts in einem Vakuumtrockenschrank bei 50 °C und 10 mm Druck das Lösemittel entfernt. Die Durchführung der Gelpermeationschromatographie (Test C) gegen Polystyrolstandards ergab $M_n$ = 92.800 g/mol und $M_w$ = 155.000 g/mol.
Anschließend wurde der Hotmelt mit einen Haake Extruder bestehend aus Haake Rheocord®, Haake Rheomex® und Haake RF 1 Roll Feeder® und einer Bügeldüse mit 300 µm Spaltbreite bei verschiedenen Temperaturen auf ein silikonisiertes Trennpapier mit 50 g/m$^2$ beschichtet.
Es wurden die Testmethoden A und D durchgeführt.

Resultate

Zur Untersuchung der Orientierung von Haftklebesystemen, insbesondere von Haftklebemassen auf Acrylat-Blockcopolymerbasis, wurden zunächst verschiedene Polystyrol-Blockcopolymere über eine kontrollierte radikalische Polymerisation hergestellt. Alle Blockcopolymere sind bezüglich der Temperaturstabilität und Fließviskosität im Hotmelt-Prozeß verarbeitbar.
Zur Herstellung orientierter Haftklebemassen wurden die Blockcopolymere aus der Schmelze verarbeitet und durch den Fließvorgang innerhalb der Düse vororientiert. Anschließend wird der Klebefilm auf das Trägermaterial mit einer bestimmten Schichtdicke übertragen. Zur Einstellung der Schichtdicke ist ein bestimmtes Reckverhältnis zwischen Düsenbreite und Schichtdicke erforderlich. In diesen Versuchen wurde das Reckverhältnis auf 1:6 eingestellt.
Durch das Verhältnis von Düsenspaltbreite und Schichtdicke der Klebemasse auf dem Trägermaterial kann das Maß der Orientierung der Polymerketten aber frei variiert werden.

Zur experimentellen Bestätigung wurden die Klebemassen mit unterschiedlichen Temperaturen beschichtet. Zur Minimierung der Relaxationszeit wurden die Haftklebemasse direkt auf ein silikonisiertes Trennpapier bei Raumtemperatur aufgetragen. Zur Analyse für das Maß der Orientierung wurde der Rückschrumpf und der Δn-Wert (Test B, Version 1, sowie Test D) gemessen. Die Ergebnisse sind in Tabelle 1 dargestellt.

Tabelle 1:

| Versuchsparameter zur Orientierung der Blockcopolymere | | | |
|---|---|---|---|
| Tabelle 1 | | | |
| Beispiel | Rückschrumpf [%] | Beschichtungstemperatur [°C] | Δn-Werte |
| 1 | 50 | 180 | $9,3 \cdot 10^{-4}$ |
| 1 | 42 | 195 | $4,2 \cdot 10^{-5}$ |
| 1 | 40 | 210 | $6,0 \cdot 10^{-5}$ |
| 2 | 41 | 170 | $5,2 \cdot 10^{-5}$ |
| 2 | 37 | 190 | $7,8 \cdot 10^{-5}$ |
| 2 | 34 | 200 | $9,4 \cdot 10^{-5}$ |
| 3 | 13 | 150 | $7,3 \cdot 10^{-6}$ |
| 3 | 12 | 160 | $7,8 \cdot 10^{-6}$ |
| 3 | 9 | 170 | $9,8 \cdot 10^{-6}$ |
| 4 | 20 | 140 | $5,5 \cdot 10^{-6}$ |
| 4 | 14 | 150 | $7,0 \cdot 10^{-6}$ |
| 4 | 12 | 160 | $7,7 \cdot 10^{-6}$ |

Tabelle 1: (fortgesetzt)

| Versuchsparameter zur Orientierung der Blockcopolymere | | | |
|---|---|---|---|
| Tabelle 1 | | | |
| Beispiel | Rückschrumpf [%] | Beschichtungstemperatur [°C] | Δn-Werte |
| 5 | 22 | 140 | $5{,}1 \cdot 10^{-6}$ |
| 5 | 15 | 150 | $6{,}5 \cdot 10^{-6}$ |
| 5 | 13 | 160 | $7{,}2 \cdot 10^{-6}$ |
| Δn-Werte: Differenz der Brechungsindizes $n_{MD}$ in Richtung der Verstreckung und $n_{CD}$ senkrecht hierzu. | | | |

Der Masseauftrag blieb konstant bei 50 g/m$^2$.
Die Orientierung innerhalb der Haftklebemassen wurde durch Quantifizierung der Doppelbrechung sowie durch Messung des Rückschrumpfes bestimmt. Der Brechungsindex n eines Mediums ist gegeben über den Quotienten aus der Lichtgeschwindigkeit $c_0$ im Vakuum und der Lichtgeschwindigkeit c in dem betrachteten Medium ($n = c_0/c$), n ist eine Funktion der Wellenlänge des jeweiligen Lichts. Als Maß für die Orientierung der Haftklebemasse dient die Differenz Δn des in eine Vorzugsrichtung (Verstreckungsrichtung, machine direction MD) gemessenen Brechungsindex $n_{MD}$ und des in einer Richtung senkrecht zur Vorzugsrichtung (cross direction CD) gemessenen Brechungsindex $n_{CD}$, also $\Delta n = n_{MD} - n_{CD}$, dieser Wert ist durch die in Test B beschriebenen Messungen zugänglich.
Alle Muster zeigten eine Orientierung der Polymerketten. Die ermittelten Δn-Werte sind in Tabelle 1 aufgelistet, wobei die größte Orientierung für das Beispiel 1 bei einer Beschichtungstemperatur von 180 °C gemessen wurde ($\Delta n = 9{,}3 \cdot 10^{-4}$). Hier lag der Rückschrumpf bei 50 %.
Tabelle 1 kann entnommen werden, dass durch die Beschichtungstemperatur die Orientierung der Haftklebemassen gesteuert werden kann. Durch Erhöhung der Beschichtungstemperatur läßt sich der Rückschrumpf beispielsweise verringern. Weitere Einflußfaktoren sind die Comonomerzusammensetzung, das gesamte Molekulargewicht des Blockcopolymers sowie die Molekulargewichte des Mittel- sowie der Endblöcke. Durch Variation dieser Parameter lässt sich eine Vielzahl unterschiedlicher Ausprägungen der Orientierung einstellen.
Weitere Parameter sind das Reckverhältnis (aus Spaltbreite der Beschichtungsdüse im Verhältnis zur Schichtdicke des Haftklebemassenfilms auf dem Träger) sowie die Beschichtungsgeschwindigkeit durch das Maß der eingebrachten Scherung.
Zur Untersuchung der Langzeitstabilität der Orientierung wurden die Rückschrumpfwerte der Beispiele 1 bis 5 nach einem Monat Lagerungszeit bei Raumtemperatur nachgemessen. Die Ergebnisse sind in Tabelle 2 zusammengefasst.

Tabelle 2

| Beispiel | Rückschrumpf nach Lagerung [%] | Beschichtungstemperatur [°C] |
|---|---|---|
| 1 | 44 | 180 |
| 1 | 38 | 195 |
| 1 | 35 | 210 |
| 2 | 35 | 170 |
| 2 | 33 | 190 |
| 2 | 30 | 200 |
| 3 | 11 | 150 |
| 3 | 10 | 160 |
| 3 | 6 | 170 |
| 4 | 16 | 140 |
| 4 | 12 | 150 |
| 4 | 11 | 160 |
| 5 | 20 | 140 |
| 5 | 12 | 150 |

Tabelle 2 (fortgesetzt)

| Beispiel | Rückschrumpf nach Lagerung [%] | Beschichtungstemperatur [°C] |
|---|---|---|
| 5 | 10 | 160 |

Die gemessenen Rückschrumpfwerte in Tabelle 2 verdeutlichen, daß der Rückschrumpf und damit die Orientierung nach Lagerung über einen Monat nahezu vollständig erhalten bleibt. Die gemessenen Werte unterscheiden sich kaum von den Werten der Frischmuster. Somit wird durch die sofortige Ausbildung eines physikalischen Netzwerkes aus Polystyroldomänen die Orientierung innerhalb der Haftklebemasse eingefroren.
Diese Eigenschaft ist insbesonders für die Anwendung als Haftklebemasse von großem Vorteil, da die derart hergestellten Haftklebebänder die Eigenschaften für den Verkauf über einen langen Zeitraum bewahren.
Für die Verwendung als Haftklebemasse wurde von den Beispielen 1 bis 5 zusätzlich die Klebkraft auf Stahl ermittelt. Die Werte sind in Tabelle 3 zusammengefasst.

Tabelle 3

| Beispiel | KK-Stahl [N/cm] |
|---|---|
| 1 | 5,1 |
| 2 | 3,8 |
| 3 | 3,6 |
| 4 | 3,6 |
| 5 | 3,5 |
| KK: Klebkraft auf Stahl 50 $g/m^2$ Masseauftrag | |

Die Werte liegen auf einem für Blockcopolymere typischen Niveau. Dagegen zeigt das Zug/Dehnverhalten insbesondere der stark orientierten Beispiele 1 einen deutlichen Einfluß der Orientierung auf die physikalischen Eigenschaften der Haftklebemassen.
Die stark orientierten Beispiele zeigen in Verstreckungsrichtung eine bedeutend geringere Dehnung. Die Spannung steigt bereits auf einer sehr kurzen Strecke schnell an und die Muster reißen. In der Querrichtung lassen sich Beispiele mit z.T. weit über 1000 % Dehnung bedeutend weiter strecken und sind in dieser Richtung aber auch weniger reißfest. Dieses Verhalten ist insbesondere für durch Verstreckung rückstandsfrei wieder ablösbarer Selbstklebestreifen wie tesa Powerstrip™ von großem Interesse, da hier unter Verstreckung die Klebkraft abgesenkt wird und somit diese Haftklebebänder wiederum rückstandsfrei vom Substrat entfernt werden können. Mit den orientierten Blockcopolymereren müssen die Muster bedeutend weniger gestreckt werden, um einen ähnlichen Effekt zu erzielen.

## Patentansprüche

1. Haftklebefilm, mindestens enthaltend eine Haftklebemasse auf Basis von zumindest einem Blockcopolymer, wobei die Gewichtsanteile der Blockcopolymere in Summe zumindest 50 % der Haftklebemasse ausmachen, wobei zumindest ein Blockcopolymer zumindest teilweise auf Basis von (Meth-)Acrylsäurederivaten zusammengesetzt ist, wobei weiterhin zumindest ein Blockcopolymer mindestens die Einheit P(A)-P(B)-P(A) aus wenigstens einem Polymerblock P(B) und wenigstens zwei Polymerblöcken P(A) aufweist und wobei

   - P(A) unabhängig voneinander Homo- oder Copolymerblöcke aus Monomeren A repräsentieren, wobei die Polymerblöcke P(A) jeweils eine Erweichungstemperatur im Bereich von + 20 °C bls + 175 °C aufweisen,
   - P(B) einen Homo- oder Copolymerblock aus Monomeren B repräsentiert, wobei der Polymerblock P(B) eine Erweichungstemperatur im Bereich von - 130 °C bis + 10 °C aufweist.
   - die Polymerblöcke P(A) und P(B) nicht homogen miteinander mischbar sind,

   **dadurch gekennzeichnet, daß**
   der Haftklebefilm orientiert ist, indem er eine Vorzugsrichtung besitzt, wobei der in Vorzugsrichtung mittels Spektralphotometers gemessene Brechungsindex $n_{MD}$ größer ist als der in einer Richtung senkrecht zur Vorzugsrichtung mittels Spektralphotometer gemessene Brechungsindex $n_{CD}$.

2. Haftklebefilm nach Anspruch 1, **dadurch gekennzeichnet, daß** die Differenz $\Delta n = n_{MD} - n_{CD}$ mindestens $1 \cdot 10^{-5}$ beträgt.

3. Haftklebefilm nach zumindest einem der vorangehenden Ansprüche, **dadurch gekennzeichnet, daß** die Haftklebemasse einen Rückschrumpf - definiert nach Prüfmethode D - von zumindest 5 % aufweist.

4. Haftklebefilm nach vorangehendem Anspruch, **dadurch gekennzeichnet, daß** der Aufbau zumindest eines Blockcopolymers durch eine oder mehrere der folgenden allgemeinen Formeln beschrieben werden kann:

$$P(A)\text{-}P(B)\text{-}P(A) \qquad (I)$$

$$P(B)\text{-}P(A)\text{-}P(B)\text{-}P(A)\text{-}P(B) \qquad (II)$$

$$[P(B)\text{-}P(A)]_nX \qquad (III)$$

$$[P(B)\text{-}P(A)]_nX[P(A)]_m \qquad (IV),$$

- wobei n = 3 bis 12, m = 3 bis 12 und X ein chemisches Bauelement darstellt, über das verschiedene Polymerarme miteinander verknüpft sind,
- wobei die Polymerblöcke P(A) unabhängig voneinander Homo- oder Copolymerblöcke aus den Monomeren A repräsentieren, wobei die Polymerblöcke P(A) jeweils eine Erweichungstemperatur im Bereich von + 20 °C bis + 175 °C aufweisen,
- und wobei die Polymerblöcke P(B) unabhängig voneinander Homo- oder Copolymerblocke aus den Monomeren B repräsentieren, wobei die Polymerblöcke P(B) jeweils eine Erweichungstemperatur im Bereich von - 130 °C bis + 10 °C aufweisen.

5. Haftklebefilm nach zumindest einem der vorangehenden Ansprüche, **dadurch gekennzeichnet, daß** zumindest ein Blockcopolymer einen symmetrischen Aufbau derart aufweist, daß in der Kettenlänge und/oder der chemischen Struktur identische Polymerblöcke P(A) und/oder daß in der Kettenlänge und/oder der chemischen Struktur identische Polymerblöcke P(B) vorliegen.

6. Haftklebefilm nach zumindest einem der vorangehenden Ansprüche, **dadurch gekennzeichnet, daß** zumindest ein Blockcopolymer eines oder mehrere der folgenden Kriterien aufweist:

- eine Molmasse $M_n$ zwischen 25.000 und 600.000 g/mol,
- eine Polydispersität $D = M_w/M_n$ von nicht mehr als 3,
- einen Anteil der Polymerblöcke P(A) zwischen 5 und 49 Gew.-%, bevorzugt zwischen 7,5 und 35 Gew.-%, insbesondere zwischen 10 und 30 Gew.-%, bezogen auf die Triblockcopolymerzusammensetzung
- ein oder mehrere aufgepropfte Seitenketten.

7. Haftklebefilm nach zumindest einem der vorangehenden Ansprüche, **dadurch gekennzeichnet, daß** das Verhältnis der Kettenlängen der Polymerblöcke P(A) zu denen der Polymerblöcke P(B) so gewählt wird, daß die Polymerblöcke P(A) als disperse Phase ("Domänen") in einer kontinuierlichen Matrix der Polymerblöcke P(B) vorliegen, insbesondere als kugelförmige oder verzerrt kugelförmige oder zylinderförmige Domänen.

8. Haftkiebefilm nach zumindest einem der vorangehenden Ansprüche, **dadurch gekennzeichnet, daß** die Haftklebemasse ein Polymerblend eines oder mehrerer Blockcopolymere entsprechend den vorstehenden Ansprüchen darstellt
mit zumindest einem Diblockcopolymer P(A)-P(B),

- wobei die Polymerblöcke P(A) unabhängig voneinander Homo- oder Copolymerblöcke aus den Monomeren

A repräsentieren, wobei die Polymerblöcke P(A) jeweils eine Erweichungstemperatur im Bereich von + 20 °C bis + 175 °C aufweisen,

- und wobei die Polymerblöcke P(B) unabhängig voneinander Homo- oder Copolymerblöcke aus den Monomeren B repräsentieren, wobei die Polymerblöcke P(B) jeweils eine Erweichungstemperatur im Bereich von - 130 °C bis + 10 °C aufweisen,

und/oder mit zumindest einem Polymeren P'(A) und/oder P'(B),

- wobei die Polymere P'(A) Homo- und/oder Copolymere aus den Monomeren A repräsentieren, wobei die Polymere P'(A) jeweils eine Erweichungstemperatur im Bereich von + 20 °C bis + 175 °C aufweisen,
- wobei die Polymere P'(B) Homo- und/oder Copolymere aus den Monomeren B repräsentieren, wobei die Polymere P'(B) jeweils eine Erweichungstemperatur im Bereich von - 130 °C bis + 10 °C aufweisen,
- wobei die Polymere P'(A) beziehungsweise P'(B) bevorzugt mit den Polymerblöcken P(A) beziehungsweise P(B) mischbar sind.

**9.** Haftklebefilm nach Anspruch 8, **dadurch gekennzeichnet, daß** zumindest ein Diblockcopolymer eines oder mehrere der folgenden Kriterien aufweist:

- eine Molmasse $M_n$ zwischen 5.000 und 600.000 g/mol,
- eine Polydispersität $D = M_w/M_n$ von nicht mehr als 3,
- einen Anteil der Polymerblöcke P(A) zwischen 3 und 50 Gew.-%, bevorzugt zwischen 5 und 35 Gew.-%, bezogen auf die Diblockcopolymerzusammensetzung.
- eine oder mehrere aufgepfropfte Seitenketten.

**10.** Haftklebefilm nach zumindest einem der vorangehenden Ansprüche, **dadurch gekennzeichnet, daß** als Monomere B Verbindungen aus den folgenden Gruppen gewählt werden:

- 75 bis 100 Gew.-% Acrylsäure- und/oder Methacrylsäurederivate der allgemeinen Struktur (VI)

$$CH_2{=}CH(R^1)(COOR^2) \qquad \text{(VI)}$$

wobei $R^1$ = H oder $CH_3$ und $R^2$ = H oder lineare, verzweigte oder ringförmige, gesättigte oder ungesättigte Alkylreste mit 1 bis 30, insbesondere mit 4 bis 18 Kohlenstoffatomen darstellt,

- bis zu 25 Gew.-% Vinylverbindungen, welche bevorzugt funktionelle Gruppen enthalten.

**11.** Haftklebefilm nach zumindest einem der vorangehenden Ansprüche, **dadurch gekennzeichnet, daß** der Haftklebemasse Klebharze beigemischt sind, insbesondere solche, die mit den Polymerblöcken P(B) verträglich sind, bevorzugt zu einem Gewichtsanteil bis zu 40 Gew.-%, sehr bevorzugt bis zu 30 Gew.-%, bezogen auf die Haftklebemasse, und/oder daß der Haftklebemasse Weichmacher, Füllstoffe, Keimbildner, Blähmittel, Compoundierungsmittel und/oder Alterungsschutzmittel zugesetzt sind.

**12.** Haftklebefilm nach zumindest einem der vorangehenden Ansprüche, **gekennzeichnet durch** einen einschichtigen Produktaufbau, wobei die Schicht aus einer Haftklebemasse entsprechend einem der vorangehenden Ansprüche besteht.

**13.** Haftklebefilm nach zumindest einem der Ansprüche 1 bis 12, **gekennzeichnet durch** einen mehrschichtigen Produktaufbau, insbesondere einen zwei- oder dreischichtigen Produktaufbau, wobei zumindest eine der Schichten aus einer Haftklebemasse entsprechend einem der vorangehenden Ansprüche besteht und bevorzugt eine Dicke von mindestens 10 µm, besonders bevorzugt von mindestens 25 µm aufweist, und wobei bevorzugt eine der weiteren Schichten aus einem Elastomer besteht.

**14.** Haftklebefilm nach zumindest einem der vorangehenden Ansprüche, **gekennzeichnet durch** zumindest eine Trägerschicht.

**15.** Verfahren zur Herstellung von Haftklebefllmen, wie sie in zumindest einem der vorangehenden Ansprüche beschrieben werden, **dadurch gekennzeichnet, daß** die Haftklebemasse aus Schmelze beschichtet wird.

**16.** Verfahren nach Anspruch 15. **dadurch gekennzeichnet, daß** die Haftklebemasse bei der Beschichtung aus der Schmelze gereckt wird.

**17.** Verfahren nach zumindest einem der Ansprüche 15 oder 16, **dadurch gekennzeichnet, daß** die Haftklebemasse durch eine Schmelzdüse oder durch eine Extrusionsdüse beschichtet wird.

**18.** Verfahren nach zumindestens einem der Ansprüche 15 bis 17, **dadurch gekennzeichnet, daß** der Grad der Orientierung durch die Beschichtungstemperatur und/oder das ReckVerhältnis gesteuert wird.

**19.** Verwendung von Haftklebefilmen, mindestens enthaltend eine Haftklebemasse auf Basis von zumindest einem Blockcopolymer, wobei die Gewichtsanteile der Blockcopolymere in Summe zumindest 50 % der Haftklebemasse ausmachen, wobei zumindest ein Blockcopolymer zumindest teilweise auf Basis von (Meth-)Acrylsäurederivaten zusammengesetzt ist, wobei weiterhin zumindest ein Blockcopolymer mindestens die Einheit P(A)-P(B)-P(A) aus wenigstens einem Polymerblock P(B) und wenigstens zwei Polymerblöcken P(A) aufweist und wobei

- P(A) unabhängig voneinander Homo- oder Copolymerblöcke aus Monomeren A repräsentieren, wobei die Polymerblöcke P(A) jeweils eine Erweichungstemperatur im Bereich von + 20 °C bis + 175 °C aufweisen,
- P(B) einen Homo- oder Copolymerblock aus Monomeren B repräsentiert, wobei der Polymerblock P(B) eine Erweichungstemperatur im Bereich von - 130 °C bis + 10 °C aufweist,
- die Polymerblöcke P(A) und P(B) nicht homogen miteinander mischbar sind,

wobei der Haftklebefilm orientiert ist, indem er eine Vorzugsrichtung besitzt, wobei der in Vorzugsrichtung mittels Spektralphotometers gemessene Brechungsindex $n_{MD}$ größer ist als der in einer Richtung senkrecht zur Vorzugsrichtung mittels Spektralphotometers gemessene Brechungsindex $n_{CD}$, für ein- oder doppelseitige Haftklebebänder oder für Transfertapes.

**20.** Verwendung nach Anspruch 19 für haftklebende Stanzprodukte.

**21.** Verwendung nach zumindest einem der Ansprüche 19 oder 20, **dadurch gekennzeichnet, daß** ein Haftklebefilm nach zumindest einem der Ansprüche 1 bis 15 eingesetzt wird.

## Claims

**1.** Pressure sensitive adhesive film at least comprising a pressure sensitive adhesive based on at least one block copolymer, the weight fractions of the block copolymers totaling at least 50% of the adhesive, one block copolymer being composed at least in part on the basis of (meth)acrylic acid derivatives, additionally at least one block copolymer comprising at least the unit P(A)-P(B)-P(A) comprising at least one polymer block P(B) and at least two polymer blocks P(A), where

- P(A) independently of one another represent homopolymer blocks or copolymer blocks of monomers A, the polymer blocks P(A) each having a softening temperature in the range from +20°C to +175°C,
- P(B) represents a homopolymer block or copolymer block of monomers B, the polymer block P(B) having a softening temperature in the range from -130°C to +10°C,
- the polymer blocks P(A) and P(B) are not homogeneously miscible with one another,

**characterized in that** the pressure sensitive adhesive film is oriented, possessing a preferential direction, with the refractive index $n_{MD}$ measured in the preferential direction by means of a spectrophotometer being greater than the refractive index $n_{CD}$ measured in a direction perpendicular to the preferential direction by means of a spectrophotometer.

**2.** Film according to Claim 1, **characterized in that** the difference $\Delta n = n_{MD} - n_{CD}$ is at least $1 \cdot 10^{-5}$.

**3.** Film according to at least one of the preceding claims, **characterized in that** the adhesive has a shrinkback - defined by test method D - of at least 5%.

**4.** Film according to the preceding claim, **characterized in that** the structure of at least one block copolymer can be described by one or more of the following general formulae:

$$P(A)\text{-}P(B)\text{-}P(A) \quad (I)$$

$$P(B)\text{-}P(A)\text{-}P(B)\text{-}P(A)\text{-}P(B) \quad (II)$$

$$[P(B)\text{-}P(A)]_nX \quad (III)$$

$$[P(B)\text{-}P(A)]_nX[P(A)]_m \quad (IV),$$

- where n = 3 to 12, m = 3 to 12 and X is a chemical component via which different polymer arms are linked to one another,
- the polymer blocks P(A) independently of one another represent homopolymer or copolymer blocks of the monomers A, the polymer blocks P(A) each having a softening temperature in the range from +20°C to +175°C, and
- the polymer blocks P(B) independently of one another represent homopolymer or copolymer blocks of the monomers B, the polymer blocks P(B) each having a softening temperature in the range from -130°C to +10°C.

**5.** Film according to at least one of the preceding claims, **characterized in that** at least one block copolymer has a symmetrical structure such that polymer blocks P(A) which are identical in chain length and/or chemical structure and/or polymer blocks P(B) which are identical in chain length and/or chemical structure are present.

**6.** Film according to at least one of the preceding claims, **characterized in that** at least one block copolymer features one or more of the following criteria:

- a molar mass $M_n$ of between 25 000 and 600 000 g/mol,
- a polydispersity $D = M_w/M_n$ of not more than 3,
- a polymer block P(A) fraction of between 5 and 49% by weight, preferably between 7.5 and 35% by weight, in particular between 10 and 30% by weight, based on the triblock copolymer composition,
- one or more grafted-on side chains.

**7.** Film according to at least one of the preceding claims, **characterized in that** the ratio of the chain lengths of the polymer blocks P(A) to those of the polymer blocks P(B) is chosen in such a way that the polymer blocks P(A) are present as a disperse phase ("domains") in a continuous matrix of the polymer blocks P(B), in particular as spherical or distortedly spherical or cylindrical domains.

**8.** Film according to at least one of the preceding claims, **characterized in that** the pressure sensitive adhesive constitutes a polymer blend of one or more block copolymers as specified in the above claims
with at least one diblock copolymer P(A)-P(B),

- where the polymer blocks P(A) independently of one another represent homopolymer of copolymer blocks or the monomers A, the polymer blocks P(A) each having a softening temperature in the range from +20°C to +175°C,
- and where the polymer blocks P(B) independently of one another represent homopolymer or copolymer blocks of the monomers B, the polymer blocks P(B) each having a softening temperature from the range from -130°C to +10°C,

and/or with at least one polymer P'(A) and/or P'(B),

- where the polymers P'(A) represent homopolymers and/or copolymers of the monomers A, the polymers P'(A) each having a softening temperature in the range from +20°C to +175°C,
- where the polymers P'(B) represent homopolymers and/or copolymers of the monomers B, the polymers P'(B) each having a softening temperature in the range from -130°C to +10°C,
- and where the polymers P'(A) and P'(B), respectively, are preferably miscible with the polymer blocks P(A) and P(B), respectively.

**9.** Film according to Claim 8, **characterized in that** at least one diblock copolymer features one or more of the following criteria:

- a molar mass $M_n$ of between 5 000 and 600 000 g/mol,
- a polydispersity $D = M_w/M_n$ of not more than 3,
- a polymer block P(A) fraction of between 3 and 50% by weight, preferably between 5 and 35% by weight, based on the diblock copolymer composition,
- one or more grafted-on side chains.

**10.** Film according to at least one of the preceding claims, **characterized in that** compounds from the following groups are chosen as monomers B:

- from 75 to 100% by weight of acrylic and/or methacrylic acid derivatives of the general structure (VI)

$$CH_2=CH(R^1)(COOR^2) \qquad (VI)$$

where $R^1$ = H or $CH_3$ and $R^2$ = H or linear, branched or cyclic, saturated or unsaturated alkyl radicals having from 1 to 30, in particular from 4 to 18, carbon atoms,
- up to 25% by weight of vinyl compounds, preferably containing functional groups.

**11.** Film according to at least one of the preceding claims, **characterized in that** the pressure sensitive adhesive is admixed with tackifier resins, particularly those which are compatible with the polymer blocks P(B), preferably in a weight fraction of up to 40% by weight, very preferably up to 30% by weight, based on the adhesive, and/or **characterized in that** plasticizers, fillers, nucleators, blowing agents, compounding agents and/or ageing inhibitors are added to the adhesive.

**12.** Film according to at least one of the preceding claims, **characterized by** a single-layer product structure, the layer being composed of a pressure sensitive adhesive as specified in one of the preceding claims.

**13.** Film according to at least one of Claims 1 to 12, **characterized by** a multilayer product structure, especially a two-layer or three-layer product structure, at least one of the layers being composed of a pressure sensitive adhesive as specified in one of the preceding claims and having a thickness of preferably at least 10 µm, with particular preference of at least 25 µm, and one of the other layers preferably being composed of an elastomer.

**14.** Film according to at least one of the preceding claims, **characterized by** at least one backing or carrier layer.

**15.** Process for producing pressure sensitive adhesive films as described in at least one of the preceding claims, **characterized in that** the pressure sensitive adhesive is coated from the melt.

**16.** Process according to Claim 15, **characterized in that** the adhesive is stretched during coating from the melt.

**17.** Process according to at least one of Claims 15 and 16, **characterized in that** the adhesive is coated through a melt die or through an extrusion die.

**18.** Process according to at least one of Claims 15 to 17, **characterized in that** the degree of orientation is controlled by the coating temperature and/or the draw ratio.

**19.** Use of pressure sensitive adhesive films at least comprising a pressure sensitive adhesive based on at least one block copolymer, the weight fractions of the block copolymers totaling at least 50% of the adhesive, at least one block copolymer being composed at least in part on the basis of (meth)acrylic acid derivatives, additionally at least one block copolymer comprising at least the unit P(A)-P(B)-P(A) comprising at least one polymer block P(B) and at least two polymer blocks P(A), where

- P(A) independently of one another represent homopolymer blocks or copolymer blocks of monomers A, the polymer blocks P(A) each having a softening temperature in the range from +20°C to +175°C,
- P(B) represents a homopolymer block or copolymer block of monomers B, the polymer block P(B) having a softening temperature in the range from -130°C to +10°C,
- the polymer blocks P(A) and P(B) are not homogeneously miscible with one another,
  the pressure sensitive adhesive film being oriented, possessing a preferential direction, with the refractive index $n_{MD}$ measured in the preferential direction by means of a spectrophotometer being greater than the refractive index $n_{CD}$ measured in a direction perpendicular to the preferential direction by means of a spectrophotometer, for single-sided or double-sided pressure sensitive adhesive tapes or for transfer tapes.

**20.** Use according to Claim 19 for pressure sensitively adhesive punched products.

**21.** Use according to at least one of Claims 19 and 20, **characterized in that** a film according to at least one of Claims 1 to 15 is used.

## Revendications

**1.** Film autoadhésif qui contient au moins une pâte adhésive à base d'au moins un copolymère séquencé, la somme des proportions pondérales des copolymères séquencés représentant au moins 50% de la pâte autoadhésive, au moins un copolymère séquencé étant au moins en partie constitué de dérivés d'acide (méth)acrylique, et en outre au moins un copolymère séquencé présente au moins l'unité P (A) -P (B) -P (A) constituée d'au moins un bloc polymère P(B) et d'au moins deux blocs polymères P(A), et dans lequel

- les P(A) représentent indépendamment l'un de l'autre des blocs homopolymères ou copolymères constitués de monomères A, les blocs polymères P(A) ayant tous une température d'amollissement comprise dans la plage de +20°C à +175°C,
- P(B) représente un bloc homopolymère ou copolymère constitué de monomères B, le bloc polymère P(B) ayant une température d'amollissement comprise dans la plage de -130°C à +10°C,
- les blocs polymères P(A) et P(B) ne peuvent être mélangés de manière homogène l'un avec l'autre,

**caractérisé en ce que**
le film autoadhésif est orienté par le fait qu'il possède une direction préférentielle, l'indice de réfraction $\eta_{MD}$ mesuré par un spectrophomètre dans la direction préférentielle étant plus grand que l'indice de réfraction $\eta_{CD}$ mesuré par un spectrophomètre dans une direction perpendiculaire à la direction préférentielle.

**2.** Film autoadhésif selon la revendication 1, **caractérisé en ce que** la différence $\Delta\eta = \eta_{MD} - \eta_{CD}$ est d'au moins $1 \cdot 10^{-5}$.

**3.** Film autoadhésif selon au moins l'une quelconque des revendications précédentes, **caractérisé en ce que** la pâte autoadhésive présente un retrait défini par la méthode d'essai D d'au moins 5%.

**4.** Film autoadhésif selon la revendication précédente, **caractérisé en ce que** la structure d'au moins un copolymère séquencé peut être décrite par une ou plusieurs des formules générales ci-dessous:

$$P(A)\text{-}P(B)\text{-}P(A) \quad (I)$$

$$P(B)\text{-}P(A)\text{-}P(B)\text{-}P(A)\text{-}P(B) \quad (II)$$

$$[P(B)\text{-}P(A)]_nX \quad (III)$$

$$[P(B)\text{-}P(A)]_nX[P(A)]_m \quad (IV),$$

dans lesquelles n = 3 à 12, m = 3 à 12 et X représente un composant chimique par lequel les différents bras

polymères sont reliés les uns aux autres,

- les blocs polymères P(A) représentant indépendamment l'un de l'autre des blocs homopolymères ou copolymères constitués des monomères A, les blocs polymères P(A) présentant tous une température d'amollissement comprise dans la plage de +20°C à +175°C et
- les blocs polymères P(B) représentant indépendamment l'un de l'autre des blocs homopolymères ou copolymères constitués des monomères B, les blocs polymères P(B) présentant tous une température d'amollissement comprise dans la plage de -130°C à +10°C.

**5.** Film autoadhésif selon au moins l'une quelconque des revendications précédentes, **caractérisé en ce qu'**au moins un copolymère séquencé présente une structure symétrique de telle sorte que les blocs polymères P(A) ont la même longueur de chaîne et/ou la même structure chimique et/ou les blocs polymères P(B) ont la même longueur de chaîne et/ou la même structure chimique.

**6.** Film autoadhésif selon au moins l'une quelconque des revendications précédentes, **caractérisé en ce qu'**au moins un copolymère séquencé satisfait un ou plusieurs des critères ci-dessous:

- une masse molaire $M_n$ comprise entre 25 000 et 600 000 g/mole,
- une polydispersité $D = M_w/M_n$ non supérieure à 3,
- une proportion de blocs polymères P(A) comprise entre 5 et 49% en poids, de préférence entre 7,5 et 35% en poids et en particulier entre 10 et 30% en poids par rapport à la composition du copolymère triséquencé,
- une ou plusieurs chaînes latérales greffées.

**7.** Film autoadhésif selon au moins l'une quelconque des revendications précédentes, **caractérisé en ce que** le rapport entre la longueur de chaîne des blocs polymères P(A) et celle des blocs polymères P(B) est sélectionnée de telle sorte que les blocs polymères P(A) sont présents sous forme de phase dispersée ("domaines") dans une matrice continue de blocs polymères P(B) et en particulier sous la forme de domaines de forme sphérique, de forme sphérique déformée ou de forme cylindrique.

**8.** Film autoadhésif selon au moins l'une quelconque des revendications précédentes, **caractérisé en ce que**
la pâte autoadhésive est un mélange de polymères constitué d'un ou de plusieurs copolymères séquencés qui correspond aux revendications précédentes,
avec au moins un copolymère diséquencé P(A)-P(B),

- les blocs polymères P(A) représentant indépendamment l'un de l'autre des blocs homopolymères ou copolymères constitués de monomères A, les blocs polymères P(A) présentant tous une température d'amollissement comprise dans la plage de +20°C à +175°C,
- les blocs polymères P(B) représentant indépendamment l'un de l'autre des blocs homopolymères ou copolymères constitués de monomères B, les blocs polymères P(B) ayant tous une température d'amollissement comprise dans la plage de -130°C à +10°C,
  et/ou avec des polymères P'(A) et/ou P'(B),
- les polymères P'(A) représentant des homopolymères et/ou copolymères constitués des monomères A, les polymères P'(A) ayant tous une température d'amollissement comprise dans la plage de +20°C à +175°C,
- les polymères P'(B) représentant des homopolymères et/ou des copolymères constitués des monomères B, les polymères P'(B) ayant tous une température d'amollissement comprise dans la plage de -130°C à +10°C,
- les polymères P'(A) et P'(B) pouvant de préférence être mélangés avec les blocs polymères P(A) et P(B) respectifs.

**9.** Film autoadhésif selon la revendication 8, **caractérisé en ce qu'**au moins un copolymère diséquencé répond à un ou plusieurs des critères ci-dessous:

- une masse molaire $M_n$ comprise entre 5 000 et 600 000 g/mole,
- une polydispersité $D = M_w/M_n$ non supérieure à 3,
- une proportion de blocs polymères P(A) comprise entre 3 et 50% en poids, de préférence entre 5 et 35% en poids par rapport à la composition du copolymère triséquencé,
- une ou plusieurs chaînes latérales greffées.

**10.** Film autoadhésif selon au moins l'une quelconque des revendications précédentes, **caractérisé en ce que** comme

monomères B, on sélectionne des composés dans les groupes ci-dessous:

- de 75 à 100% en poids de dérivés d'acide acrylique et/ou d'acide méthacrylique de structure générale (VI)

$$CH_2=CH(R^1)\ (COOR^2) \qquad (VI)$$

  dans laquelle $R^1$ = H ou $CH_3$ et $R^2$ = H ou des radicaux alkyle linéaires, ramifiés ou cycliques, saturés ou insaturés, et qui comptent de 1 à 30, en particulier de 4 à 18 atomes de carbone,
- jusque 25% en poids de composés du vinyle qui contiennent de préférence des groupes fonctionnels.

**11.** Film autoadhésif selon au moins l'une quelconque des revendications précédentes, **caractérisé en ce que** la pâte autoadhésive est mélangée à des résines adhésives et en particulier des résines qui sont compatibles avec les blocs polymères P(B), de préférence dans une proportion pondérale qui peut aller jusque 40% en poids et de façon préférable jusque 30% en poids par rapport à la pâte autoadhésive et/ou **en ce que** l'on ajoute à la pâte autoadhésive des plastifiants, des charges, des agents de germination, des agents de gonflement, des agents de mélange et/ou des agents de protection contre le vieillissement.

**12.** Film autoadhésif selon au moins l'une quelconque des revendications précédentes, **caractérisé par** une structure en une couche, la couche étant constituée d'une pâte autoadhésive qui correspond à l'une quelconque des revendications précédentes.

**13.** Film autoadhésif selon au moins l'une quelconque des revendications 1 à 12, **caractérisé par** une structure en plusieurs couches et en particulier une structure en deux ou trois couches, au moins l'une des couches étant constituée d'une pâte autoadhésive qui correspond à l'une quelconque des revendications précédentes et ayant de préférence une épaisseur d'au moins 10 µm et de façon particulièrement préférable d'au moins 25 µm, de préférence l'une des autres couches étant constituée d'un élastomère.

**14.** Film autoadhésif selon au moins l'une quelconque des revendications précédentes, **caractérisé par** au moins une couche de support.

**15.** Procédé de fabrication des films autoadhésifs qui sont décrits dans au moins l'une quelconque des revendications précédentes, **caractérisé en ce que** la pâte autoadhésive est appliquée à l'état fondu.

**16.** Procédé selon la revendication 15,
**caractérisé en ce que** la pâte autoadhésive est étirée à l'état fondu lors du revêtement.

**17.** Procédé selon au moins la revendication 15 ou 16, **caractérisé en ce que** la pâte autoadhésive est appliquée par une filière en matière fondue ou par une filière d'extrusion.

**18.** Procédé selon au moins l'une quelconque des revendications 15 à 17, **caractérisé en ce que** le degré d'orientation peut être contrôlé par la température de revêtement et/ou par le rapport d'étirage.

**19.** Utilisation de films autoadhésifs qui contiennent au moins une pâte autoadhésive à base d'au moins un copolymère séquencé, la somme des proportions pondérales des copolymères séquencés représentant au moins 50% de la pâte autoadhésive, au moins un copolymère séquencé étant au moins en partie constitué de dérivés d'acide (méth) acrylique, et en outre au moins un copolymère séquencé présente au moins l'unité P(A)-P(B)-P(A) constituée d'au moins un bloc polymère P(B) et d'au moins deux blocs polymères P(A), et dans lequel

- les P(A) représentent indépendamment l'un de l'autre des blocs homopolymères ou copolymères constitués de monomères A, les blocs polymères P(A) ayant tous une température d'amollissement comprise dans la plage de +20°C à +175°C,
- P(B) représente un bloc homopolymère ou copolymère constitué de monomères B, le bloc polymère P(B) ayant une température d'amollissement comprise dans la plage de -130°C à +10°C,
- les blocs polymères P(A) et P(B) ne peuvent être mélangés de manière homogène l'un avec l'autre,
  le film autoadhésif étant orienté par le fait qu'il possède une direction préférentielle, l'indice de réfraction $\eta_{MD}$ mesuré par un spectrophomètre dans la direction préférentielle étant plus grand que l'indice de réfraction $\eta_{CD}$

mesuré par un spectrophomètre dans une direction perpendiculaire à la direction préférentielle, pour des rubans autoadhésifs une face ou double face ou pour des rubans de transfert.

**20.** Utilisation selon la revendication 19 pour des produits autoadhésifs estampés.

**21.** Utilisation selon au moins la revendication 19 ou 20, **caractérisée en ce que** l'on utilise un film autoadhésif selon au moins l'une quelconque des revendications 1 à 15.